# EUROPÄISCHE PATENTSCHRIFT

(11) **EP 2 394 032 B1**
(45) Veröffentlichungstag und Bekanntmachung des Hinweises auf die Patenterteilung: **13.07.2016**
(21) Anmeldenummer: 10701674.3
(22) Anmeldetag: 28.01.2010
(51) Int. Cl.: F01L 1/344, F16K 11/07, F15B 13/04

(54) **STEUERVENTILE ZUR STEUERUNG VON DRUCKMITTELSTRÖMEN**
FLOW CONTROL VALVES
VANNES DE CONTRÔLE DE DÉBIT

(30) Priorität: 09.02.2009 DE 102009008056
(43) Veröffentlichungstag der Anmeldung: 14.12.2011
(73) Patentinhaber: Schaeffler Technologies AG & Co. KG, 91074 Herzogenaurach (DE)
(72) Erfinder: HOPPE, Jens, 91056 Erlangen (DE); RÖHR, Andreas, 92637 Weiden (DE); BUSSE, Michael, 91074 Herzogenaurach (DE)
(86) Internationale Anmeldenummer: PCT/EP2010/050974
(87) Internationale Veröffentlichungsnummer: WO 2010/089239

(56) Entgegenhaltungen:
- EP-A2- 1 930 560
- WO-A1-2008/006717
- WO-A2-2007/126438
- US-A1- 2003 121 486
- US-A1- 2008 066 572

## Beschreibung

### Gebiet der Erfindung

Die Erfindung liegt auf dem technischen Gebiet der Brennkraftmaschinen und betrifft ein Steuerventil zur Steuerung von Druckmittelströmen für Phasensteller, insbesondere Nockenwellenversteller, von Brennkraftmaschinen.

### Stand der Technik

In Brennkraftmaschinen mit mechanischem Ventiltrieb werden Gaswechselventile durch die Nocken einer von einer Kurbelwelle angetriebenen Nockenwelle betätigt, wobei über Anordnung und Form der Nocken die Steuerzeiten der Gaswechselventile festlegbar sind. Durch eine Änderung der Phasenlage zwischen Kurbel- und Nockenwelle kann in Abhängigkeit des Betriebszustands der Brennkraftmaschine Einfluss auf die Steuerzeiten der Gaswechselventile genommen werden, wodurch vorteilhafte Effekte, beispielsweise eine Verringerung von Kraftstoffverbrauch und Schadstofferzeugung, erzielbar sind. Hinlänglich bekannt ist die Anwendung spezieller Vorrichtungen zur Veränderung der Phasenlage zwischen Kurbel- und Nockenwelle in Brennkraftmaschinen, die von Fachleuten auf dem technischen Gebiet meist als Nockenwellenversteller bezeichnet werden.

Allgemein umfassen Nockenwellenversteller ein über ein Antriebsrad mit der Kurbelwelle in Antriebsverbindung stehendes Antriebsteil und ein nockenwellenfestes Abtriebsteil, sowie einen An- und Abtriebsteil miteinander koppelnden Verstellmechanismus, welcher das Drehmoment vom An- auf das Abtriebsteil überträgt und eine Verstellung und Fixierung der Phasenlage zwischen diesen beiden ermöglicht. In Nockenwellenverstellern mit einem hydraulischen Verstellmechanismus ist zwischen An- und Abtriebsteil wenigstens ein Druckraum mit einem gegeneinander wirkenden Druckkammerpaar geformt, wobei An- und Abtriebsteil durch entsprechende Druckbeaufschlagung der Druckkammern zueinander verstellt werden können, um eine Änderung der Phasenlage zwischen Nocken- und Kurbelwelle zu bewirken.

In modernen Brennkraftmaschinen werden hydraulische Stellmechanismen von einer elektronischen Steuereinheit gesteuert, welche auf Basis erfasster Kenndaten der Brennkraftmaschine in der Regel über ein elektromagnetisches Steuerventil den Zu- und Abfluss von Druckmittel regelt. In einer typischen Bauweise umfassen elektromagnetische Steuerventile ein (hydraulisches) Ventilteil mit einem axial verschiebbar aufgenommenen Steuerkolben, der durch einen elektromagnetisch bewegbaren Stößel gegen die Federkraft eines rückstellenden Federelements verschiebbar ist. Derartige Steuerventile sind als solche wohlbekannt und beispielsweise in dem deutschen Patent DE 19727180 C2, dem deutschen Patent DE 19616973 C2, der europäischen Patentanmeldung EP 1 596 041 A2 und der deutschen Offenlegungsschrift DE 102 39 207 A1 der Anmelderin eingehend beschrieben.

Während des Betriebs der Brennkraftmaschine treten an der Nockenwelle Wechsel- und Schleppmomente auf, die auf das mit der Nockenwelle drehfest verbundene Abtriebsteil einwirken. Bei ungenügender Druckmittelversorgung, wie dies etwa während der Startphase oder im Leerlauf der Fall ist, werden An- und Abtriebsteil durch die Wechselmomente in unkontrollierter Weise zueinander bewegt, wodurch Verschleiß gefördert und unangenehme Geräusche verursacht werden. Zudem schwankt in diesem Fall die Phasenlage zwischen Kurbel- und Nockenwelle stark, so dass die Brennkraftmaschine nicht startet oder zumindest unruhig läuft.

Um die Übertragung von Wechselmomenten zu vermeiden, werden hydraulische Nockenwellenversteller mit einer Verriegelungseinrichtung zur drehfesten Verriegelung von An- und Abtriebsteil in Basisposition ausgerüstet. Eine solche Verriegelungseinrichtung umfasst typischer Weise wenigstens einen im An- oder Abtriebsteil aufgenommenen Pin, der durch eine Druckfeder aus seiner Aufnahme gedrängt wird und in Basisposition formschlüssig in eine vom jeweils anderen Teil geformte Ausnehmung greifen kann. Durch stirnseitiges Beaufschlagen mit Druckmittel kann der Pin hydraulisch entriegelt werden. Eine Verriegelung von An- und Abtriebsteil erfolgt in einer für den Start der Brennkraftmaschine thermodynamisch günstigen Phasenlage, welche von der konkreten Auslegung der Brennkraftmaschine abhängt. Als Basisposition kann eine Früh, Spät- oder Zwischenstellung, beispielsweise Mittenstellung, gewählt werden. Bezogen auf die Antriebsrichtung des Antriebsteils bzw. Nockenwelle entspricht die Spätstellung einer maximalen Verstellung des Abtriebsteils relativ zum Antriebsteil in einer zur Antriebsrichtung gegengleichen Drehrichtung (in der die Volumina der vorlaufenden Druckkammern - meist als Kammern "B" bezeichnet - maximal sind), und die Frühstellung entsprechend einer maximalen Verdrehung des Abtriebsteils relativ zum Antriebsteil in einer zur Antriebsrichtung gleichen Drehrichtung (in der die Volumina der nachlaufenden Druckkammern - meist als Kammern "A" bezeichnet - maximal sind). Eine Zwischenstellung liegt zwischen diesen beiden End-Phasenlagen. Die Mittenstellung liegt zumindest annähernd in der Mitte zwischen Früh- und Spätstellung.

Hydraulische Nockenwellenversteller mit einer Verriegelungseinrichtung zur drehfesten Verriegelung von An- und Abtriebsteil in Basisposition sind als solche hinlänglich bekannt und beispielsweise in den Druckschriften DE 20 2005 008 264 U1, EP 1 596 040 A2, DE 10 2005 013 141 A1, DE 199 08 934 A1 und WO 2006/039966 der Anmelderin eingehend beschrieben.

Wie insbesondere aus der letztgenannten Druckschrift hervorgeht, ist es gängige Praxis bei hydraulischen Nockenwellenverstellern mit Verriegelung in Mittenstellung, dass das Abtriebsteil während des Stoppens der Brennkraftmaschine in eine Phasenlage gebracht wird, die gegenüber der Mittenstellung in Richtung "früh" verstellt ist. Das Abtriebsteil wird somit beim Starten der Brennkraftmaschine durch die Schleppmomente der Nockenwelle selbsttätig in Mittenstellung getrieben und dort verriegelt. Wird jedoch beim Abstellen der Brennkraftmaschine eine solche frühe Phasenlage nicht erreicht, beispielsweise durch "Abwürgen" des Motors, verstellt sich das Abtriebsteil selbsttätig in Richtung "spät", so dass eine Verriegelung in Mittenstellung nicht möglich ist. Somit sind für eine Verriegelung in Mittenstellung spezielle Vorkehrungen zu treffen, durch die das Abtriebsteil aus einer späten Phasenlage in Basisposition verstellt wird. In hydraulischen Nockenwellenverstellers sind zu diesem Zweck beispielsweise Drehfedern vorgesehen, durch die das Abtriebsteil gegenüber dem Antriebsteil in Richtung der gewünschten Basisposition vorgespannt wird. Um auf zusätzliche Vorkehrungen zur Verstellung von An- und Abtriebsteil in Basisposition zu verzichten, wäre es wünschenswert, wenn beim Abstellen der Brennkraftmaschine auch aus einer späten Phasenlage heraus eine hydraulische Verstellung in Richtung "früh" zur Verriegelung in Mittenstellung möglich wäre. Jedoch werden beispielsweise bei dem in der WO 2006/039966 gezeigten Nockenwellenversteller die beiden Pins zur drehfesten Verriegelung von An- und Abtriebsteil in einer Weise mit Druckmittel beaufschlagt, dass der eine Frühverstellung hemmende Pin bei Verstellung des Abtriebsteils in Richtung "früh" und der eine Spätverstellung hemmende Pin bei Verstellung des Abtriebsteils in Richtung "spät" hydraulisch entriegelt sind. Demnach ist bei einer hydraulischen Verstellung in Richtung "früh" der eine Frühverstellung hemmende Pin entriegelt, so dass das Abtriebsteil über die Mittenstellung hinweg ohne eine Verriegelung dieses Pins verstellt wird und eine drehfeste Verriegelung von An- und Abtriebsteil in Mittenstellung nicht möglich ist.

Die US-Patentanmeldung Nr. 2003/0121486 A1 zeigt eine Ventilsteuereinrichtung mit einem Steuerventil, das über ein zylindrisches Ventilgehäuse mit einem einseitig offenen Gehäusehohlraum und einem im Gehäusehohlraum aufgenommenen Steuerkolben verfugt. Das Ventilgehäuse weist einen axialen Ablaufanschluss, einen radialen ersten, zweiten und dritten Arbeitsanschluss, sowie zwei radiale Duckanschlüsse auf. Die beiden Arbeitsanschlüsse können wahlweise mit dem ersten Druckanschluss oder Ablaufanschluss, der dritte Arbeitsanschluss wahlweise mit dem zweiten Druckanschluss und Ablaufanschluss verbunden werden.

### Aufgabe der Erfindung

Demgegenüber besteht die Aufgabe der vorliegenden Erfindung darin, in hydraulischen Nockenwellenverstellern, ohne weitere Vorkehrungen zur Verstellung von An- und Abtriebsteil in Basisposition, über eine hydraulische Verstellung des Abtriebsteils in Richtung "früh" eine drehfeste Verriegelung von An- und Abtriebsteil in Basisposition zu ermöglichen.

### Lösung der Aufgabe

Diese und weitere Aufgaben werden nach dem Vorschlag der Erfindung durch ein Steuerventil mit den Merkmalen des unabhängigen Patentanspruchs gelöst. Vorteilhafte Ausgestaltungen der Erfindung sind durch die Merkmale der Unteransprüche angegeben.

Gemäß der Erfindung ist ein Steuerventil zur Steuerung von Druckmittelströmen gezeigt, welches insbesondere zur Steuerung von Druckmittelströmen eines hydraulischen Phasenstellers, insbesondere Nockenwellenverstellers, dient, welcher mit einer Verriegelungseinrichtung zur drehfesten Verriegelung von An- und Abtriebsteil in einer von der Spätstellung verschiedenen Basisposition versehen ist.

Das Steuerventil umfasst ein zylindrisches Ventilgehäuse mit einem einseitig offenen Gehäusehohlraum, welches mit einem axialen Ablaufanschluss (T4), einem radialen ersten Arbeitsanschluss (B), einem radialen zweiten Arbeitsanschluss (A), einem radialen dritten Arbeitsanschluss (Pin), einem radialen Druckanschluss (P) und drei radialen Ablaufanschlüssen (T1-T3) versehen ist, die jeweils in den Gehäusehohlraum (306) münden. Hierbei ist in Axialrichtung der Druckanschluss (P) zwischen einem ersten Ablaufanschluss (T1) und einem zweiten Ablaufanschluss (T2), der erste Arbeitsanschluss (B) und der zweite Arbeitsanschluss (A) zwischen dem zweiten Ablaufanschluss (T2) und einem dritten Ablaufanschluss (T3) angeordnet.

Das Steuerventil umfasst des Weiteren einen im Gehäusehohlraum axial verschiebbar aufgenommenen, zylindrischen Steuerkolben mit einem Kolbenhohlraum (311), wobei der Steuerkolben so ausgebildet ist, dass durch dessen Axialverschiebung
- der erste Arbeitsanschluss (B) wahlweise mit dem Druckanschluss (P) und dem zweiten Ablaufanschluss (T2) fluidleitend verbindbar ist,
- der zweite Arbeitsanschluss (A) wahlweise mit dem Druckanschluss (P) und dem dritten Ablaufanschluss (T3) fluidleitend verbindbar ist,
- der dritte Arbeitsanschluss (Pin) wahlweise mit dem Druckanschluss (P) und dem axialen Ablaufanschluss (T4) fluidleitend verbindbar ist, wobei in einer ersten Kolbenstellung der erste Arbeitsanschluss (B) mit dem Druckanschluss (P) und zugleich der dritte Arbeitsanschluss (Pin) mit dem axialen Ablaufanschluss (T4) fluidleitend verbunden ist, und in einer zweiten Kolbenstellung der zweite Arbeitsanschluss (A) mit dem Druckanschluss (P) und zugleich der dritte Arbeitsanschluss (Pin) mit dem axialen Ablaufanschluss (T4) fluidleitend verbunden ist.

Gemäß einer vorteilhaften Ausgestaltung des erfindungsgemäßen Steuerventils ist der Steuerkolben so ausgebildet, dass in einer dritten Kolbenstellung der zweite Arbeitsanschluss (A) mit dem Druckanschluss (P) und zugleich sowohl der erste Arbeitsanschluss (B) mit dem zweiten Ablaufanschluss (T2) als auch der dritte Arbeitsanschluss (Pin) mit dem axialen Ablaufanschluss (T4) fluidleitend verbunden sind.

Gemäß einer weiteren vorteilhaften Ausgestaltung des erfindungsgemäßen Steuerventils ist der Steuerkolben so ausgebildet, dass in einer vierten Kolbenstellung sowohl der erste Arbeitsanschluss (B) als auch der zweite Arbeitsanschluss (A) gesperrt sind und zugleich der dritte Arbeitsanschluss (Pin) mit dem Druckanschluss (P) fluidleitend verbunden ist.

Gemäß einer weiteren vorteilhaften Ausgestaltung des erfindungsgemäßen Steuerventils ist der Steuerkolben so ausgebildet, dass in einer fünften Kolbenstellung der erste Arbeitsanschluss (B) mit dem Druckanschluss (P) und zugleich sowohl der zweite Arbeitsanschluss (A) mit dem dritten Ablaufanschluss (T3) als auch der dritte Arbeitsanschluss (Pin) mit dem axialen Ablaufanschluss (T4) fluidleitend verbunden sind.

Die Erfindung erstreckt sich weiterhin auf einen hydraulischen Phasensteller, beispielsweise Nockenwellenversteller, der wenigstens ein wie oben beschriebenes Steuerventil aufweist.

Die Erfindung erstreckt sich weiterhin auf eine Brennkraftmaschine, die mit wenigstens einem wie oben beschriebenen hydraulischen Phasensteller, insbesondere Nockenwellenversteller, ausgerüstet ist.

### Kurze Beschreibung der Zeichnungen

Die Erfindung wird nun anhand von Ausführungsbeispielen näher erläutert, wobei Bezug auf die beigefügten Zeichnungen genommen wird. Gleiche bzw. gleich wirkende Elemente sind in den Zeichnungen mit denselben Bezugszahlen bezeichnet. Es zeigen:
Fig. 1A-1E Axialschnittansichten eines Steuerventils, welches nicht Teil der Erfindung ist;
Fig. 2A-2E Axialschnittansichten eines Steuerventils, welches nicht Teil der Erfindung ist;
Fig. 3A-3E Axialschnittansichten eines beispielhaften Steuerventils gemäß der Erfindung;
Fig. 4 eine schematische Darstellung zur Veranschaulichung der Schaltlogik der erfindungsgemäßen Steuerventile.

### Ausführliche Beschreibung der Zeichnungen

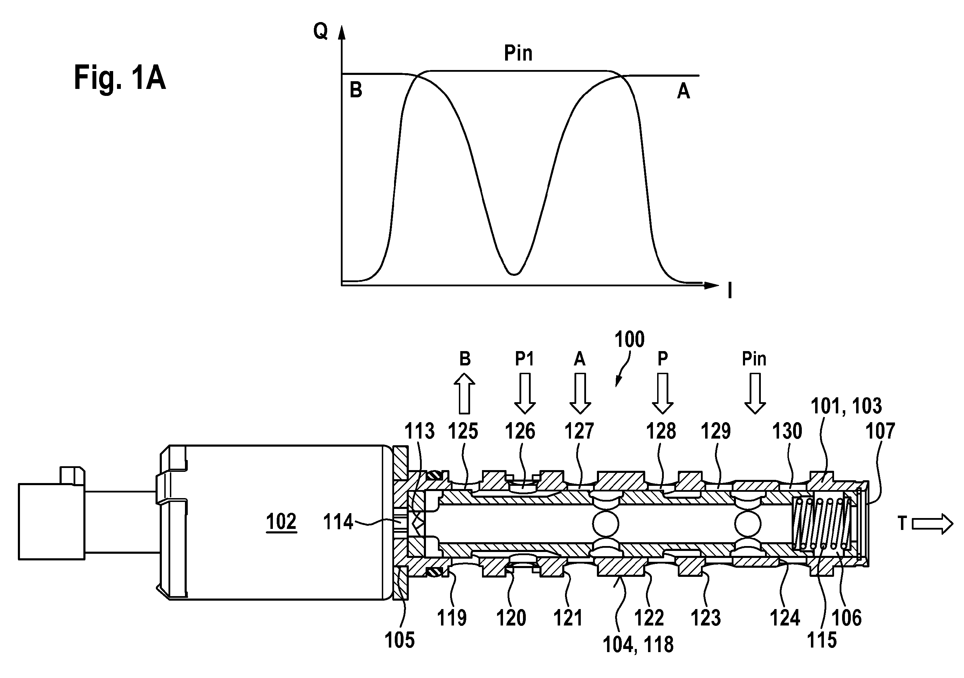

Unter Bezugnahme auf die Figuren 1A-1E, 2A-2E und 3A-3E werden elektromagnetische Steuerventile beschrieben, die zur Regelung von Druckmittelströmen in hydraulischen Phasenstellern, insbesondere hydraulischen Nockenwellenverstellern, eingesetzt werden können. Ohne Absicht die Erfindung hierauf einzuschränken, sei angenommen, dass die in den Ausführungsbeispielen erläuterten Steuerventile zur Regelung von Druckmittelströmen in hydraulischen Rotationskolbenverstellern dienen.

Wie dem Fachmann an sich bekannt ist, umfassen hydraulische Rotationskolbenversteller als Antriebsteil einen Außenrotor und als Abtriebsteil einen zum Außenrotor konzentrischen Innenrotor, die zueinander drehverstellbar angeordnet sind, wobei im radialen Zwischenraum zwischen Außen- und Innenrotor von einem der beiden Rotoren Druckräume geformt werden, in die sich jeweils ein mit dem anderen Rotor verbundener Flügel erstreckt, wodurch die Druckräume jeweils in ein Paar gegeneinander wirkender Druckkammern (in Antriebsrichtung nachlaufende Druckammer "A" bzw. in Antriebsrichtung vorlaufende Druckkammer "B") geteilt werden. Zur drehfesten Verriegelung von Außen- und Innenrotor in Basisposition, hier beispielsweise Mittenstellung, ist zumindest ein Pin vorgesehen, der in einem der beiden Rotoren aufgenommen ist, durch ein Federelement aus seiner Aufnahme gedrängt wird und formschlüssig in eine vom jeweils anderen Rotor geformte Ausnehmung greifen kann. Der Pin kann durch stirnseitiges Beaufschlagen mit Druckmittel hydraulisch entriegelt werden.

Seien zunächst die Figuren 1A-1E betrachtet.

Demnach setzt sich das Steuerventil 100 aus einem (hydraulischen) Ventilteil 101 und einem zur Betätigung des Ventilteils 101 dienenden Elektromagneten 102 zusammen. Der Ventilteil 101 umfasst ein im Wesentlichen hohlzylindrisches Ventilgehäuse 103 mit einem in Axialrichtung sich erstreckenden Gehäusemantel 104 und einem senkrecht zur Axialrichtung angeordneten Gehäuseboden 105, wobei Gehäusemantel 104 und Gehäuseboden 105 gemeinsam einen einseitig offenen Gehäusehohlraum 106 mit einer axialen Gehäusehohlraumöffnung 107 umgeben.

Koaxial zum Ventilgehäuse 103 ist im Gehäusehohlraum 106 ein im Wesentlichen hohlzylindrischer Steuerkolben 108 axial verschiebbar aufgenommen. Der in Form eines Hohlkolbens ausgebildete Steuerkolben 108 umfasst einen in Axialrichtung sich erstreckenden Kolbenmantel 109 und eine senkrecht zur Axialrichtung angeordnete, sich axial verjüngende Kolbennase 110. Der Kolbenmantel 109 und die Kolbennase 110 umgrenzen gemeinsam einen einseitig offenen Kolbenhohlraum 111 mit einer axialen Kolbenhohlraumöffnung 112 auf Seite der axialen Gehäusehohlraumöffnung 107. Der Kolbenmantel 109 ist in seiner radialen Abmessung dem Innenumfang des Gehäusemantels 104 angepasst.

An der in Fig. 1A-1E linken Stirnfläche 113 der Kolbennase 110 des Steuerkolbens 108 greift ein Ventilstößel 114 an, der an einem nicht dargestellten Magnetanker des Elektromagneten 102 starr befestigt ist. Wenn der Magnetanker bestromt wird, wird der Ventilstößel 114 axial versetzt und verstellt hierbei den Steuerkolben 108 in axialer Richtung entgegen der Federkraft einer Schraubendruckfeder 115. Die Schraubendruckfeder 115 stützt sich zu diesem Zweck mit ihrem einen Ende an einer ersten Ringstufe 116 des Steuerkolbens 108 und mit ihrem anderen Ende an einer zweiten Ringstufe 117 des Ventilgehäuses 103 ab. Wird der Magnetanker nicht bestromt, stellt die Schraubendruckfeder 115 den Steuerkolben 108 in seine Ausgangslage zurück (in den Figuren 1A-1 E nach links).

In eine Gehäuse-Außenumfangsfläche 118 des Gehäusemantels 104 sind sechs axial voneinander beabstandete, umlaufende Gehäuse-Ringnuten 119-124 eingearbeitet, die jeweils mit einer Mehrzahl, gleichmäßig um den Umfang verteilten, in den Gehäusehohlraum 106 mündenden Gehäuse-Radialöffnungen 125-130 versehen sind.

Entsprechend der in den Figuren 1A-1E angegebenen Anschlussbelegung dient
- eine erste Gehäuse-Ringnut 119 mit den ersten Gehäuse-Radialöffnungen 125 als (erster) Arbeitsanschluss B zur Verbindung mit den, den Innenrotor gegenüber dem Außenrotor in Richtung "spät" verstellenden Druckkammern B,
- eine zweite Gehäuse-Ringnut 120 mit den zweiten Gehäuse-Radialöffnungen 126 als (erster) Zulaufanschluss P1 zur Verbindung mit einer Druckmittelpumpe,
- eine dritte Gehäuse-Ringnut 121 mit den dritten Gehäuse-Radialöffnungen 127 als (zweiter) Arbeitsanschluss A zur Verbindung mit den, den Innenrotor gegenüber dem Außenrotor in Richtung "früh" verstellenden Druckkammern A,
- eine vierte Gehäuse-Ringnut 122 mit den vierten Gehäuse-Radialöffnungen 128 als (zweiter) Zulaufanschluss P2 zur Verbindung mit der Druckmittelpumpe,
- eine fünfte Gehäuse-Ringnut 123 mit den fünften Gehäuse-Radialöffnungen 129 und eine sechste Gehäuse-Ringnut 124 mit den sechsten Gehäuse-Radialöffnungen 130 als (gemeinsamer) Pinanschluss Pin.

Weiterhin dient die axiale Gehäusehohlraumöffnung 107 als axialer Ablaufanschluss T zur Verbindung mit einem Druckmitteltank.

In eine Kolben-Außenumfangsfläche 131 des Kolbenmantels 109 sind vier axial beabstandete, umlaufende Kolben-Ringnuten eingearbeitet: eine erste Kolben-Ringnut 133, eine zweite Kolben-Ringnut 134, eine dritte Kolben-Ringnut 135 und eine vierte Kolben-Ringnut 135. Durch die sich axial verjüngende Kolbennase 110 ist eine Kolbenausnehmung 132 geformt. In die Kolbenausnehmung 132, die zweite Kolben-Ringnut 134 und die vierte Kolben-Ringnut 136 sind jeweils, gleichmäßig um den Umfang verteilt, erste bis dritte Kolben-Radialöffnungen 137-139 eingearbeitet, die in den Kolbenhohlraum 111 münden.

Ein durch die Kolbenausnehmung 132 und die erste Kolben-Ringnut 133 geformter, erster Ringsteg 140 ist mit einer ersten Steuerkante 145 und einer zweiten Steuerkante 146 versehen. Ein durch die erste Kolben-Ringnut 133 und die zweite Kolben-Ringnut 134 geformter, zweiter Ringsteg 141 ist mit einer dritten Steuerkante 147 und einer vierten Steuerkante 148 versehen. Ein durch die zweite Kolben-Ringnut 134 und die dritte Kolben-Ringnut 135 geformter, dritter Ringsteg 142 ist mit einer fünften Steuerkante 149 versehen. Ein durch die dritte Kolben-Ringnut 135 und die vierte Kolben-Ringnut 136 geformter, vierter Ringsteg 143 ist mit einer sechsten Steuerkante 150 und einer siebten Steuerkante 151 versehen. Ein durch die vierte Kolben-Ringnut 136 und dem, der Kolbennase 110 entgegen gesetzten, stirnseitigen Ende des Kolbenmantelabschnitts 109 geformter, fünfter Ringsteg 144 ist mit einer achten Steuerkante 152 versehen. Die ersten bis fünften Ringstege 140-144 dienen insbesondere zur axialen Führung des Steuerkolbens 108 innerhalb des Ventilgehäuses 103.

Die Umfangsfläche des ersten Ringstegs 140 ist so geformt, dass sie bei axialer Verschiebung des Steuerkolbens 108 den Arbeitsanschluss B dichtend überdecken oder freigeben kann, um auf diese Weise über eine Änderung der Öffnungsquerschnitte der ersten Gehäuse-Radialöffnungen 125 die Menge durchfließenden Druckmittels zu regeln, wobei eine Einstellung der Öffnungsquerschnitte über die erste Steuerkante 145 und die zweite Steuerkante 146 des ersten Ringstegs 140 erfolgt. Hierbei ist durch die erste Steuerkante 145 ein durch die Kolbenausnehmung 132 und die ersten Kolben-Radialöffnungen 137 geformter Druckmittelkanal zum axialen Ablaufanschluss T und durch die zweite Steuerkante 146 ein durch die erste Kolben-Ringnut 133 geformter Druckmittelkanal zum Zulaufanschluss P1 steuerbar.

Die Umfangsfläche des zweiten Ringstegs 141 ist so geformt, dass sie bei axialer Verschiebung des Steuerkolbens 108 den Arbeitsanschluss A dichtend überdecken oder freigeben kann, um auf diese Weise über eine Änderung der Öffnungsquerschnitte der dritten Gehäuse-Radialöffnungen 127 die Durchflussmenge von Druckmittel zu regeln, wobei eine Einstellung der Öffnungsquerschnitte über die dritte Steuerkante 147 und die vierte Steuerkante 148 des zweiten Ringstegs 141 erfolgt. Hierbei ist durch die dritte Steuerkante 147 ein durch die erste Kolben-Ringnut 133 geformter Druckmittelkanal zum Zulaufanschluss P1 und durch die vierte Steuerkante 148 ein durch die zweite Kolben-Ringnut 134 und die zweiten Kolben-Radialöffnungen 138 geformter Druckmittelkanal zum Ablaufanschluss T steuerbar.

Die Umfangsfläche des dritten Ringstegs 142 ist so geformt, dass sie bei axialer Verschiebung des Steuerkolbens 108 den Zulaufanschluss P2 dichtend überdecken oder freigeben kann, um auf diese Weise über eine Änderung der Öffnungsquerschnitte der vierten Radialöffnungen 128 die Durchflussmenge von Druckmittel zu regeln, wobei eine Einstellung der Öffnungsquerschnitte der vierten Gehäuse-Radialöffnungen 128 über die fünfte Steuerkante 149 des dritten Ringstegs 142 erfolgt. Durch die dritte Kolben-Ringnut 135 ist ein Druckmittelkanal zur fünften Gehäuse-Radialöffnung 129 und damit zum Pinanschluss Pin steuerbar.

Die Umfangsfläche des vierten Ringstegs 143 ist so geformt, dass sie bei axialer Verschiebung des Steuerkolbens 108 die fünften Gehäuse-Radialöffnungen des Pinanschlusses Pin dichtend überdecken bzw. freigeben kann, um auf diese Weise über eine Änderung der Öffnungsquerschnitte die Durchflussmenge von Druckmittel zu regeln. Eine Einstellung der Öffnungsquerschnitte erfolgt über die sechste Steuerkante 150 und siebte Steuerkante 151 des vierten Ringstegs 143. Hierbei ist durch sechste Steuerkante 150 ein durch die dritte Kolben-Ringnut 135 geformter Druckmittelkanal zum Zulaufanschluss P2 und durch die siebte Steuerkante 151 ein durch die fünfte Kolben-Ringnut 136 und die dritten Kolben-Radialöffnungen 139 geformter Druckmittelkanal zum Ablaufanschluss T steuerbar.

Die Umfangsfläche des fünften Ringstegs 144 ist so geformt, dass sie bei axialer Verschiebung des Steuerkolbens 108 die sechsten Gehäuse-Radialöffnungen 130 des Pinanschlusses Pin dichtend überdecken bzw. freigeben kann, um auf diese Weise über eine Änderung der Öffnungsquerschnitte die Durchflussmenge von Druckmittel zu regeln, wobei eine Einstellung der Öffnungsquerschnitte über die achte Steuerkante 152 des fünften Ringstegs 144 erfolgt. Hierbei ist durch die achte Steuerkante 152 ein durch die vierte Kolben-Ringnut 136 und die zugehörigen dritten Kolben-Radialöffnungen 139 geformter Druckmittelkanal zum Ablaufanschluss T steuerbar.

Somit kann in der in den Figuren 1A-1E gezeigten Anschlussbelegung durch Axialverschiebung des Steuerkolbens 108 wahlweise eine strömungstechnische Verbindung zwischen
- dem Arbeitsanschluss B und dem Zulaufanschluss P1 oder dem Ablaufanschluss T,
- dem Arbeitsanschluss A und dem Zulaufanschluss P1 oder dem Ablaufanschluss T,
- dem Pinanschluss Pin und dem Zulaufanschluss P2 oder dem Ablaufanschluss T
gesteuert werden.

Es werden nun verschiedene Stellungen des Steuerkolbens 108 anhand der Fig. 1A-1 E erläutert.

Weiterhin ist in den Figuren 1A-1 E jeweils anhand eines Diagramms der qualitative Verlauf einer Volumenstrom-Kennlinie des Steuerventils 100 dargestellt, wobei ein Volumenstrom (Q) zur Beaufschlagung der Druckkammern A, der Druckkammern B bzw. des wenigstens einen Pins mit Druckmittel gegenüber einer Stromstärke (I) zur Bestromung des Magnetankers des Elektromagneten 102 aufgetragen ist. Die Stromstärke I ist hierbei ein Maß für die Größe der Verschiebung des Steuerkolbens 108 entgegen der Federkraft der Schraubendruckfeder 115. Die momentane Position des Steuerkolbens 108 ist jeweils als Linie in das Diagramm eingetragen.

In Fig. 1A ist eine Stellung des Steuerkolbens 108 gezeigt, bei welcher der Magnetanker des Elektromagneten 102 nicht bestromt ist. Wie durch die entsprechenden Pfeile angegeben, ist in dieser Stellung des Steuerkolbens 108 der Arbeitsanschluss B über die erste Kolben-Ringnut 133 mit dem Zulaufanschluss P1 strömungstechnisch verbunden, während der Arbeitsanschluss A über die zweite Kolben-Ringnut 134 und die zweiten Kolben-Radialöffnungen 138 mit dem Ablaufanschluss T strömungstechnisch verbunden ist. Zudem ist die fünfte Gehäuse-Radialbohrung 129 des Pinanschlusses Pin über die vierte Kolben-Ringnut 136 und die dritten Kolben-Radialöffnungen 139 mit dem Ablaufanschluss T strömungstechnisch verbunden.

Dementsprechend ist der Arbeitsanschluss B in dieser Stellung des Steuerkolbens 108 mit einem maximalen Volumenstrom beaufschlagt, während sowohl der Arbeitsanschluss A als auch der Pinanschluss Pin nicht beaufschlagt sind (Volumenstrom Null). Da die Druckkammern A in Antriebsrichtung vorlaufen, kann diese Stellung des Steuerkolbens 108 zur Spätverstellung des Innenrotors relativ zum Außenrotor genutzt werden, wobei beim Passieren der Basisposition der Pin zur drehfesten Verriegelung von Außen- und Innenrotor verriegeln kann.

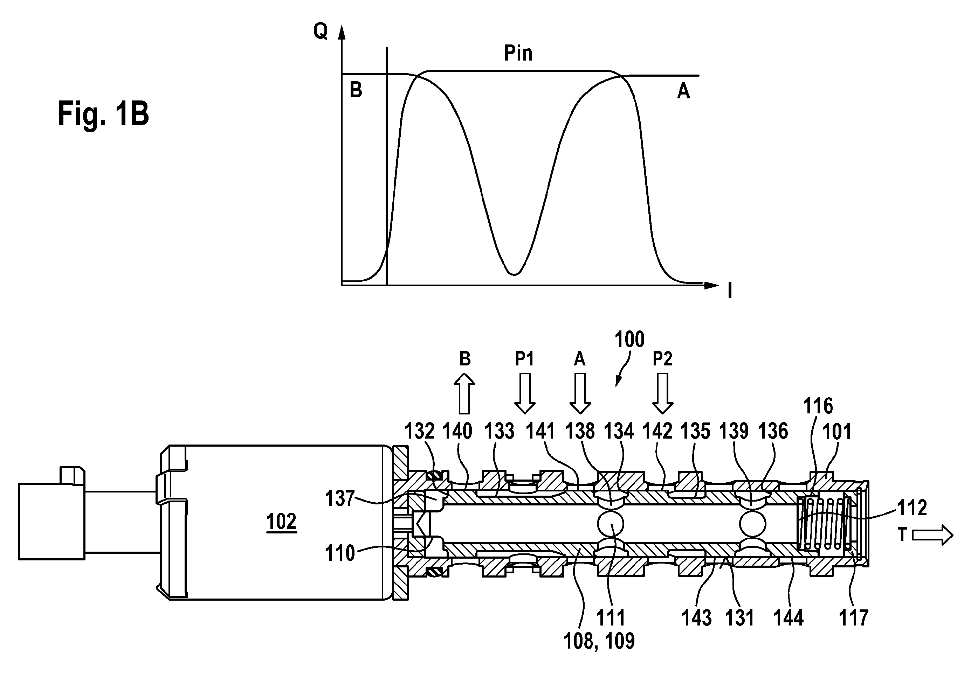

In Fig. 1 B ist eine weitere Stellung des Steuerkolbens 108 gezeigt, bei welcher der Magnetanker des Elektromagneten 102 mit einem von Null verschiedenen Strom der Stärke I1 bestromt wird, so dass der Steuerkolben 108 durch die Einwirkung des Ventilstößels 114 entgegen der Federkraft der Schraubendruckfeder 115 (in den Figuren 1A-1E nach rechts) verschoben wird. Wie durch die entsprechenden Pfeile angegeben, ist in dieser Stellung der Arbeitsanschluss B über die erste Kolben-Ringnut 133 mit dem Zulaufanschluss P1 strömungstechnisch verbunden, während der Arbeitsanschluss A über die zweite Kolben-Ringnut 134 und die zweiten Kolben-Radialöffnungen 137 mit dem Ablaufanschluss T strömungstechnisch verbunden ist. Die fünfte Gehäuse-Radialöffnung 129 des Pinanschlusses Pin ist nun vom Ablaufanschluss T getrennt und über die vierte Kolben-Ringnut 135 mit dem Zulaufanschluss P2 strömungstechnisch verbunden.

Entsprechend der strömungstechnischen Verhältnisse ist der Arbeitsanschluss B weiterhin maximal mit Druckmittel beaufschlagt und der Pinanschlusses Pin ist mit einem geringeren Volumenstrom beaufschlagt.

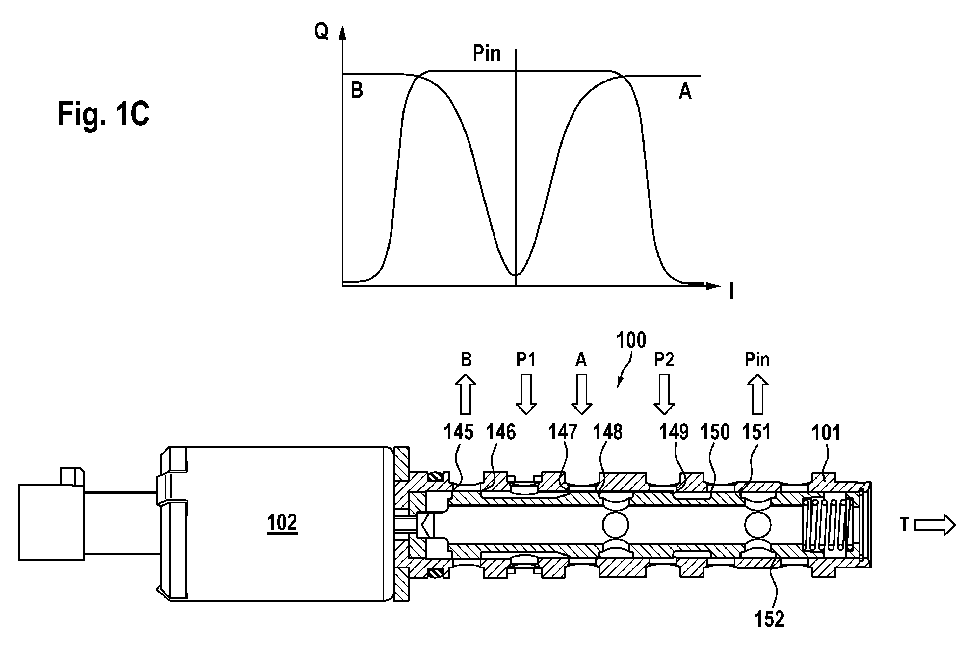

In Fig. 1C ist eine weitere Stellung des Steuerkolbens 108 gezeigt, bei welcher der Magnetanker des Elektromagneten 102 mit einem stärkeren Strom der Stromstärke I2 (I2>I1) bestromt wird, so dass der Steuerkolben 108 durch die Einwirkung des Ventilstößels 114 noch weiter entgegen der Federkraft der Schraubendruckfeder 115 verschoben wird. In dieser Stellung sind der Arbeitsanschluss A und der Arbeitsanschluss B sowohl vom Zulaufanschluss P1 als auch vom Ablaufanschluss T getrennt. Zugleich ist die fünfte Gehäuse-Radialöffnung 129 des Pinanschlusses Pin über die dritte Kolben-Ringnut 135 mit dem Zulaufanschluss P2 strömungstechnisch verbunden.

Entsprechend der strömungstechnischen Verhältnisse haben die beiden Arbeitsanschlüsse A und B in der Volumenstrom-Kennlinie nur einen sich aus Leckströmen ergebenden minimalen Volumenstrom, während der Pinanschluss Pin maximal mit Druckmittel beaufschlagt ist. Diese Stellung des Steuerkolbens 108 kann zum Fixieren einer Phasenlage zwischen Außen- und Innenrotor eingesetzt werden.

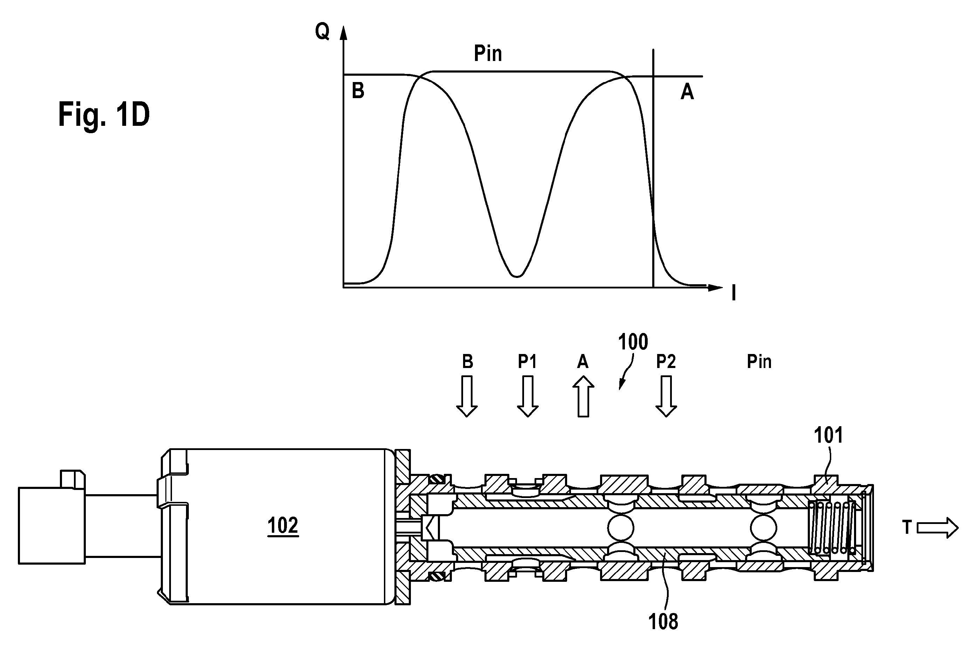

In Fig. 1 D ist eine weitere Stellung des Steuerkolbens 108 gezeigt, bei welcher der Magnetanker des Elektromagneten 102 mit einem noch stärkeren Strom der Stromstärke I3 (I3>I2) bestromt wird, so dass der Steuerkolben 108 durch die Einwirkung des Ventilstößels 114 noch weiter entgegen der Federkraft der Schraubendruckfeder 115 verschoben wird. Wie angegeben, ist in dieser Stellung der Arbeitsanschluss A über die erste Kolben-Ringnut 133 mit dem Zulaufanschluss P1 strömungstechnisch verbunden, während der Arbeitsanschluss B über die Kolbenausnehmung 132 und die ersten Kolben-Radialöffnungen 137 mit dem Ablaufanschluss T strömungstechnisch verbunden ist. Zudem wird ein Volumenstrom der strömungstechnischen Verbindung zwischen den fünften Gehäuse-Radialöffnungen 129 des Pinanschlusses Pin und dem Zulaufanschluss P2 von der fünften Steuerkante 149 des dritten Ringstegs 142 zunehmend verringert.

Entsprechend der strömungstechnischen Verhältnisse ist der Arbeitsanschluss A maximal mit Druckmittel beaufschlagt, wohingegen der Pinanschlusses Pin wesentlich geringer mit Druckmittel beaufschlagt ist.

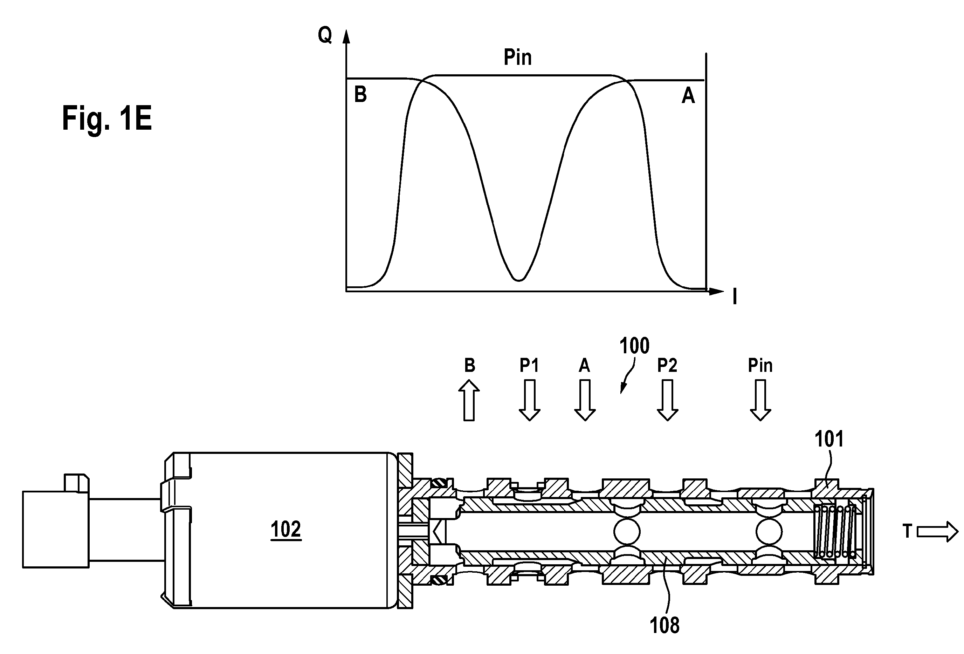

Schließlich ist in Fig. 1 E eine weitere Stellung des Steuerkolbens 108 gezeigt, bei welcher der Magnetanker des Elektromagneten 102 mit einem noch stärkeren Strom der Stromstärke I4 (I4>I3) bestromt wird, so dass der Steuerkolben 108 durch die Einwirkung des Ventilstößels 114 entsprechend einer maximalen Auslenkung noch weiter entgegen der Federkraft der Schraubendruckfeder 115 verschoben wird. Wie angegeben, ist in dieser Stellung der Arbeitsanschluss A über die erste Kolben-Ringnut 133 mit dem Zulaufanschluss P1 strömungstechnisch verbunden, während der Arbeitsanschluss B über die Kolbenausnehmung 132 und die ersten Kolben-Radialöffnungen 137 mit dem Ablaufanschluss T strömungstechnisch verbunden ist. Zudem ist die sechste Gehäuse-Radialöffnung 130 des Pinanschlusses Pin über die vierte Kolben-Ringnut 136 und die dritten Kolben-Radialöffnungen 139 mit dem Ablaufanschluss T strömungstechnisch verbunden.

Entsprechend dieser strömungstechnischen Verhältnisse ist der Arbeitsanschluss A maximal mit Druckmittel beaufschlagt, während der Volumenstrom des Pinanschlusses Pin Null ist. Diese Stellung des Steuerkolbens 108 kann für eine Frühverstellung des Innenrotors relativ zum Außenrotor eingesetzt werden, wobei der Pin zur drehfesten Verriegelung von Außen- und Innenrotor bei Erreichen der Basisposition verriegeln kann.

Das Steuerventil 100 ermöglicht somit sowohl bei hydraulischer Spätverstellung als auch bei hydraulischer Frühverstellung des Innenrotors gegenüber dem Außenrotor eine drehfeste Verriegelung von Außen- und Innenrotor in einer gegenüber der Spätstellung in Richtung "früh" versetzten Basisposition, beispielsweise Mittelposition. Da der Innenrotor aus jeder Phasenlage hydraulisch in Basisposition verstellt werden kann, sind keine zusätzlichen Vorkehrungen zur Verstellung des Innenrotors in Basisposition erforderlich, so dass in vorteilhafter Weise Bauraum und Kosten eingespart werden können.

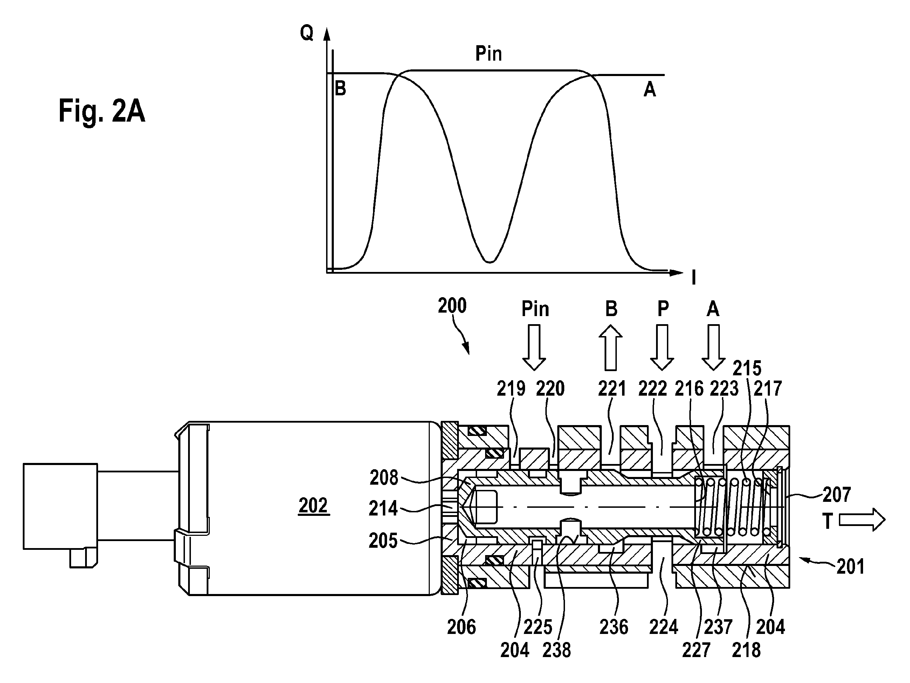

Seien nun die Figuren 2A-2E betrachtet.

Demnach setzt sich das elektromagnetische Steuerventil 200 aus einem (hydraulischen) Ventilteil 201 und einem als Aktuator dienenden Elektromagneten 202 zusammen. Der hydraulische Ventilteil 201 umfasst ein im Wesentlichen hohlzylindrisches Ventilgehäuse 203 mit einem in Axialrichtung sich erstreckenden Gehäusemantel 204 und einem mit einer axialen Bohrung versehenen Gehäusesockel 205, der teilweise im Elektromagneten 202 aufgenommen ist. Gehäusemantel 204 und Gehäusesockel 205 formen gemeinsam einen einseitig offenen Gehäusehohlraum 206 mit einer axialen Gehäusehohlraumöffnung 207.

Koaxial zum Ventilgehäuse 203 ist im Gehäusehohlraum 206 ein im Wesentlichen hohlzylindrischer Steuerkolben 208 axial verschiebbar aufgenommen. Der in Form eines Hohlkolbens ausgebildete Steuerkolben 208 umfasst einen in Axialrichtung sich erstreckenden Kolbenmantel 209 und als Endabschnitt einen Kolbenboden 210, der in Axialrichtung zum Elektromagneten 2 hin konisch zuläuft. Kolbenmantel 209 und Kolbenboden 210 umgrenzen gemeinsam einen einseitig offenen Kolbenhohlraum 211 mit einer axialen Kolbenhohlraumöffnung 212 auf Seite der axialen Gehäusehohlraumöffnung 207. Der Kolbenmantel 209 ist in seiner radialen Abmessung dem Innenumfang des Gehäusemantels 204 angepasst.

An der in den Fig. 2A-2E linken Stirnfläche 213 des Kolbenbodens 210 greift ein durch die Zentralbohrung des Gehäusesockels 205 geführter Ventilstößel 214 an, der an einem nicht dargestellten Magnetanker des Elektromagneten 202 starr befestigt ist. Wenn der Magnetanker bestromt wird, wird der Ventilstößel 214 in axialer Richtung verschoben und verstellt hierbei den Steuerkolben 208 in axialer Richtung entgegen der Federkraft einer Schraubendruckfeder 215. Die Schraubendruckfeder 215 stützt sich zu diesem Zweck mit ihrem einen Ende an einer ersten Ringstufe 216 des Steuerkolbens 208 und mit ihrem anderen Ende an einer zweiten Ringstufe 217 des Ventilgehäuses 203 ab. Wird der Magnetanker nicht bestromt, stellt die Schraubendruckfeder 215 den Steuerkolben 208 zurück (in Fig. 2A-2E nach links).

Der Gehäusemantel 204 des Ventilgehäuses 203 ist mit fünf axial beabstandeten Gehäuse-Radialöffnungen versehen (erste bis fünfte Gehäuse-Radialöffnungen 219-223), die jeweils in den Gehäusehohlraum 206 münden. Gegenüberliegend zu den ersten bis fünften Gehäuse-Radialöffnungen 219-223 ist der Gehäusemantel 204 mit zwei axial beabstandeten Gehäuse-Radialöffnungen versehen (sechste bis siebte Radialöffnungen 224-225), die gleichermaßen jeweils in den Gehäusehohlraum 206 münden.

In eine Gehäuse-Innenumfangsfläche 238 sind eine mit der dritten Gehäuse-Radialöffnung 221 verbundene, erste Gehäuse-Ringnut 236 und eine mit der fünften Gehäuse-Radialöffnung 223 verbundene, zweite Gehäuse-Ringnut 237 eingearbeitet.

Das Ventilgehäuse 203 ist mit einer Gehäuse-Außenumfangsfläche 218 passgenau in einen Hülsenhohlraum 226 einer das Ventilgehäuse umgebenden hohlzylindrischen Ventilhülse 227 eingesetzt. Die Ventilhülse 227 ist mit vier in Axialrichtung beabstandeten Hülse-Radialöffnungen versehen (erste bis vierte Hülse-Radialöffnungen 228-231), die jeweils in den Hülsenhohlraum 226 münden. Gegenüberliegend zu den ersten bis vierten Hülse-Radialöffnungen 228-231 ist die Ventilhülse 227 mit zwei axial voneinander beabstandeten Hülse-Radialöffnungen versehen (fünfte bis sechste Hülse-Radialöffnungen 232-233), die jeweils in den Hülsenhohlraum 226 münden.

In eine Hülse-Außenumfangsfläche 234 der Ventilhülse 227 ist eine Axialnut 235 eingearbeitet, welche die fünfte Hülse-Radialöffnung 232 und die sechste Hülse-Radialöffnung 233 miteinander verbindet.

Eine erste Hülse-Radialöffnung 228 ist radial fluchtend zu einer ersten Gehäuse-Radialöffnung 219 und einer zweiten Gehäuse-Radialöffnung 220 angeordnet. Eine zweite Hülse-Radialöffnung 229 ist radial fluchtend zu einer dritten Gehäuse-Radialöffnung 221 angeordnet. Eine dritte Hülse-Radialöffnung 230 ist radial fluchtend zu einer vierten Gehäuse-Radialöffnung 222 angeordnet. Eine vierte Hülse-Radialöffnung 231 ist radial fluchtend zu einer fünften Gehäuse-Radialöffnung 223 angeordnet. Eine fünfte Hülse-Radialöffnung 232 ist radial fluchtend zu einer sechsten Gehäuse-Radialöffnung 224 angeordnet. Eine sechste Hülse-Radialöffnung 233 ist radial fluchtend zu einer siebten Gehäuse-Radialöffnung 225 angeordnet.

Entsprechend der in den Figuren 2A-2E angegebenen Anschlussbelegung dienen
- die erste Hülse-Radialöffnung 228 als ein Pinanschluss Pin zur Verbindung mit dem wenigstens einen Pin zur drehfesten Verriegelung von Rotor und Stator in Basisposition,
- die zweite Hülse-Radialöffnung 229 mit der dritten Gehäuse-Radialöffnung 221 als (erster) Arbeitsanschluss B zur Verbindung mit den, den Innenrotor gegenüber dem Außenrotor in Richtung "spät" verstellenden Druckkammern B,
- die dritte Hülse-Radialöffnung 230 mit der vierten Gehäuse-Radialöffnung 222 als Zulaufanschluss P zur Verbindung mit einer Druckmittelpumpe,
- die vierte Hülse-Radialöffnung 231 mit der fünften Gehäuse-Radialöffnung 223 als (zweiter) Arbeitsanschluss A zur Verbindung mit den, den Innenrotor gegenüber dem Außenrotor in Richtung "früh" verstellenden Druckkammern A.

Weiterhin dient die axiale Gehäusehohlraumöffnung 212 als axialer Ablaufanschluss T zur Verbindung mit einem Druckmitteltank.

In eine Kolben-Außenumfangsfläche 239 des Kolbenmantels 209 sind drei axial beabstandete, umlaufende Kolben-Ringnuten eingearbeitet, nämlich eine erste Kolben-Ringnut 240, eine zweite Kolben-Ringnut 241 und eine dritte Kolben-Ringnut 242. In die zweite Kolben-Ringnut 241 sind gleichmäßig um den Umfang verteilte, erste Kolben-Radialöffnungen 243 eingearbeitet, die in den Kolbenhohlraum 211 münden. Zudem ist in die Kolben-Außenumfangsfläche 239, angrenzend an den Kolbenboden 210, eine Ringausnehmung 244 eingearbeitet, die mit gleichmäßig um den Umfang verteilten, zweiten Kolben-Radialöffnungen 255 versehen ist, die in den Kolbenhohlraum 211 münden.

Ein durch die Ringausnehmung 244 und die erste Kolben-Ringnut 240 geformter, erster Ringsteg 245 ist mit einer ersten Steuerkante 246 und einer zweiten Steuerkante 247 versehen. Ein durch die erste Kolben-Ringnut 240 und die zweite Kolben-Ringnut 241 geformter, zweiter Ringsteg 248 ist mit einer dritten Steuerkante 249 versehen. Ein durch die zweite Kolben-Ringnut 241 und die dritte Kolben-Ringnut 242 geformter, dritter Ringsteg 250 ist mit einer vierten Steuerkante 251 versehen. Ein durch die dritte Kolben-Ringnut 241 und dem stirnseitigen Ende des Kolbenmantelabschnitts 209 geformter, vierter Ringsteg 252 ist mit einer fünften Steuerkante 253 und einer sechsten Steuerkante 254 versehen.

Die ersten bis vierten Ringstege 245, 248, 250, 252 dienen insbesondere zur axialen Führung des Steuerkolbens 208 innerhalb des Ventilgehäuses 203.

Die Umfangsfläche des ersten Ringstegs 245 ist so geformt, dass sie bei axialer Verschiebung des Steuerkolbens 208 die erste Gehäuse-Radialöffnung 219 dichtend überdecken oder freigeben kann, um auf diese Weise über eine Änderung des Öffnungsquerschnitts der ersten Gehäuse-Radialöffnung 219 die Menge durchfließenden Druckmittels zu regeln, wobei eine Einstellung des Öffnungsquerschnitts über die erste Steuerkante 246 erfolgt. Hierbei ist durch die erste Steuerkante 246 ein durch die Ringausnehmung 244 und die zweiten Kolben-Radialöffnungen 256 geformter Druckmittelkanal zum axialen Ablaufanschluss T steuerbar.

Die Umfangsfläche des zweiten Ringstegs 248 ist so geformt, dass sie bei axialer Verschiebung des Steuerkolbens 208 die zweite Gehäuse-Radialöffnung 220 dichtend überdecken oder freigeben kann, um auf diese Weise über eine Änderung des Öffnungsquerschnitts der zweiten Gehäuse-Radialöffnung 220 die Durchflussmenge von Druckmittel zu regeln, wobei eine Einstellung des Öffnungsquerschnitts über die dritte Steuerkante 249 erfolgt. Hierbei ist durch die dritte Steuerkante 249 in Verbindung mit der zweiten Steuerkante 247 ein durch die zweite Gehäuse-Radialöffnung 220, die erste Kolben-Ringnut 240, die siebte Gehäuse-Radialöffnung 225, die sechste Hülse-Radialöffnung 233, die Axialnut 235, die fünfte Hülse-Radialöffnung 232, die sechste Gehäuse-Radialöffnung 224 und die dritte Kolben-Ringnut 242 geformter Druckmittelkanal zur Verbindung des Pinanschlusses Pin mit dem Zulaufanschluss P steuerbar.

Die Umfangsfläche des dritten Ringstegs 250 ist so geformt, dass sie bei axialer Verschiebung des Steuerkolbens 208 den Arbeitsanschluss B dichtend überdecken oder freigeben kann, um auf diese Weise über eine Änderung des Öffnungsquerschnitts der dritten Gehäuse-Radialöffnung 221 die Durchflussmenge von Druckmittel zu regeln, wobei eine Einstellung des Öffnungsquerschnitts über die vierte Steuerkante 251 erfolgt. Hierbei sind ein durch die dritte Kolben-Ringnut 242 geformter Druckmittelkanal zum Zulaufanschluss P und ein durch die zweite Kolben-Ringnut 241 und die erste Kolben-Radialöffnungen 243 geformter Druckmittelkanal zum Ablaufanschluss T steuerbar.

Durch die dritte Kolben-Ringnut 242 ist die vierte Gehäuse-Radialöffnung 222 bei jeder Stellung des Steuerkolbens 208 mit der sechsten Gehäuse-Radialöffnung 224 verbunden.

Die Umfangsfläche des vierten Ringstegs 252 ist so geformt, dass sie bei axialer Verschiebung des Steuerkolbens 208 den Arbeitsanschluss A dichtend überdecken oder freigeben kann, um auf diese Weise über eine Änderung des Öffnungsquerschnitts der fünften Gehäuse-Radialöffnung 223 die Durchflussmenge von Druckmittel zu regeln, wobei eine Einstellung des Öffnungsquerschnitts über die fünfte Steuerkante 253 und die sechste Steuerkante 254 erfolgt. Hierbei sind ein durch die dritte Kolben-Ringnut 242 geformter Druckmittelkanal zum Zulaufanschluss P und ein durch den Gehäusehohlraum 206 geformter Druckmittelkanal zum Ablaufanschluss T steuerbar.

Somit kann in der in den Figuren 2A-2E gezeigten Anschlussbelegung durch Axialverschiebung des Steuerkolbens 208 wahlweise eine strömungstechnische Verbindung zwischen
- dem Arbeitsanschluss B und dem Zulaufanschluss P oder dem Ablaufanschluss T,
- dem Arbeitsanschluss A und dem Zulaufanschluss P oder dem Ablaufanschluss T, und
- dem Pinanschluss Pin und dem Zulaufanschluss P oder dem Ablaufanschluss T,
gesteuert werden.

Es werden nun verschiedene Stellungen des Steuerkolbens 208 anhand der Fig. 2A-2E erläutert, wobei in den Figuren 2A-2E (analog den Figuren 1A-1E) jeweils mittels eines Diagramms ein qualitativer Verlauf der Volumenstrom-Kennlinie des Steuerventils 200 dargestellt ist.

In Fig. 2A ist eine Stellung des Steuerkolbens 208 gezeigt, bei welcher der Magnetanker des Elektromagneten 202 nicht bestromt ist. Wie durch die entsprechenden Pfeile angegeben, ist in dieser Stellung des Steuerkolbens 208 der Arbeitsanschluss B über die dritte Kolben-Ringnut 242 mit dem Zulaufanschluss P strömungstechnisch verbunden, während der Arbeitsanschluss A über den Gehäusehohlraum 206 mit dem Ablaufanschluss T strömungstechnisch verbunden ist. Zudem ist der Pinanschluss Pin über die zweite Kolben-Ringnut 241 und die ersten Kolben-Radialöffnungen 243 mit dem Ablaufanschluss T strömungstechnisch verbunden.

Entsprechend der obig erläuterten strömungstechnischen Verhältnisse ist der Arbeitsanschluss B in dieser Stellung des Steuerkolbens 208 maximal mit Druckmittel beaufschlagt, während sowohl der Arbeitsanschluss A als auch der Pinanschluss Pin nicht beaufschlagt sind (Volumenstrom Null). Diese Stellung des Steuerkolbens 208 kann zur Spätverstellung des Innenrotors relativ zum Außenrotor genutzt werden, wobei beim Passieren der Basisposition der Pin zur drehfesten Verriegelung von Außen- und Innenrotor verriegeln kann.

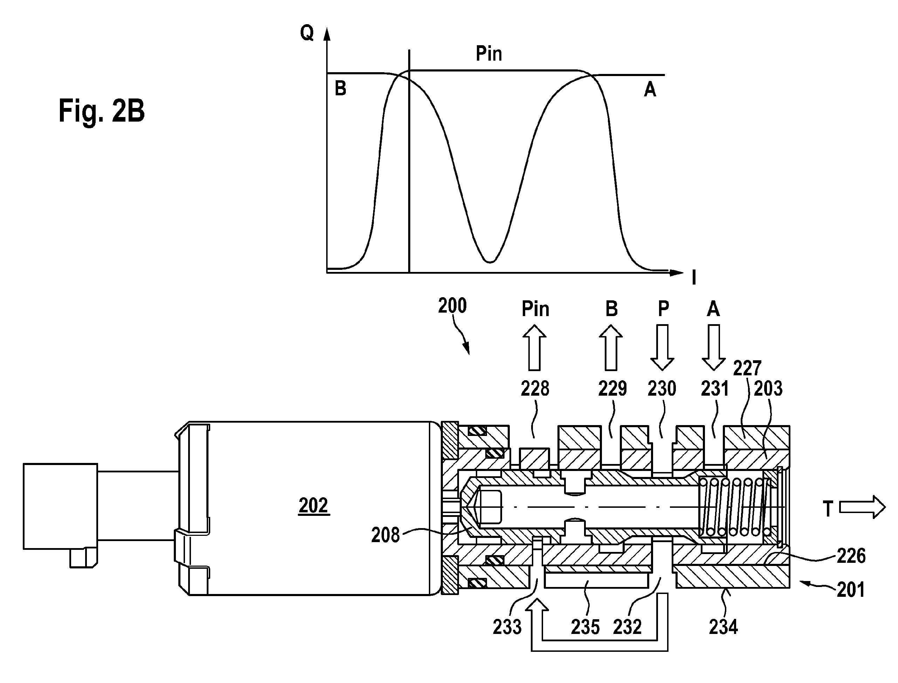

In Fig. 2B ist eine weitere Stellung des Steuerkolbens 208 gezeigt, bei welcher der Magnetanker des Elektromagneten 202 mit einem von Null verschiedenen Strom der Stärke I1 bestromt wird, so dass der Steuerkolben 208 durch die Einwirkung des Ventilstößels 214 entgegen der Federkraft der Schraubendruckfeder 215 (in den Figuren 2A-2E nach rechts) verschoben wird. Wie durch die entsprechenden Pfeile angegeben, ist in dieser Stellung der Arbeitsanschluss B über die dritte Kolben-Ringnut 242 mit dem Zulaufanschluss P strömungstechnisch verbunden, während der Arbeitsanschluss A über den Gehäusehohlraum 206 mit dem Ablaufanschluss T strömungstechnisch verbunden ist. Der Pinanschluss Pin ist vom Ablaufanschluss T getrennt und über die erste Kolben-Ringnut 240, die siebte Gehäuse-Radialöffnung 225, die sechste Hülse-Radialöffnung 233, die Axialnut 235, die fünfte Hülse-Radialöffnung 232, die sechste Gehäuse-Radialöffnung 224 und die dritte Kolben-Ringnut 242 mit dem Zulaufanschluss P strömungstechnisch verbunden.

Entsprechend der strömungstechnischen Verhältnisse ist der Arbeitsanschluss B weiterhin maximal mit Druckmittel beaufschlagt, der Pinanschlusses Pin ist gering mit Druckmittel beaufschlagt.

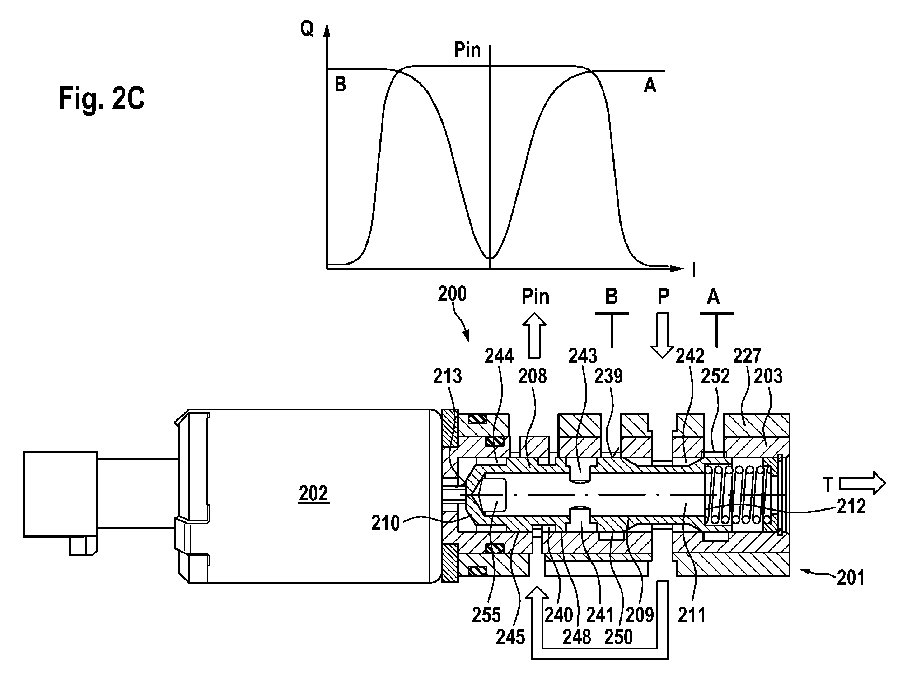

In Fig. 2C ist eine weitere Stellung des Steuerkolbens 208 gezeigt, bei welcher der Magnetanker des Elektromagneten 202 mit einem stärkeren Strom der Stromstärke I2 (I2>I1) bestromt wird, so dass der Steuerkolben 208 durch die Einwirkung des Ventilstößels 214 noch weiter entgegen der Federkraft der Schraubendruckfeder 215 verschoben wird. In dieser Stellung sind der Arbeitsanschluss A und der Arbeitsanschluss B sowohl vom Zulaufanschluss P als auch vom Ablaufanschluss T getrennt. Zugleich ist der Pinanschluss Pin mit dem Zulaufanschluss P strömungstechnisch verbunden.

Entsprechend der strömungstechnischen Verhältnisse haben die beiden Arbeitsanschlüsse A und B in der Volumenstrom-Kennlinie einen sich aus Leckströmen ergebenden minimalen Volumenstrom, während der Pinanschluss Pin maximal mit Druckmittel beaufschlagt ist. Diese Stellung des Steuerkolbens 208 kann zum Fixieren einer Phasenlage zwischen Außen- und Innenrotor eingesetzt werden.

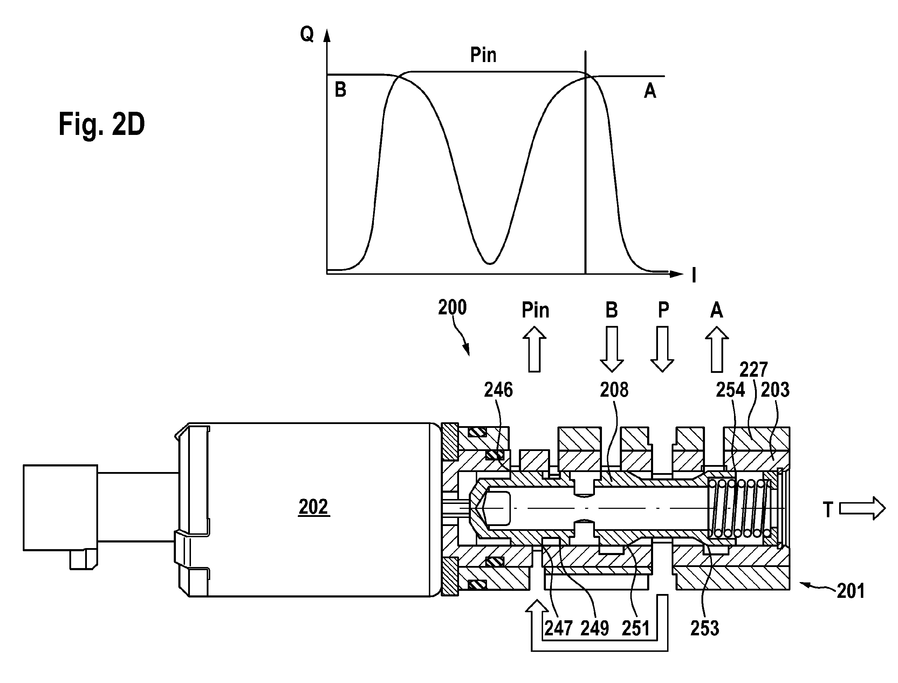

In Fig. 2D ist eine weitere Stellung des Steuerkolbens 208 gezeigt, bei welcher der Magnetanker des Elektromagneten 202 mit einem noch stärkeren Strom der Stromstärke I3 (I3>I2) bestromt wird, so dass der Steuerkolben 208 durch die Einwirkung des Ventilstößels 214 noch weiter entgegen der Federkraft der Schraubendruckfeder 215 verschoben wird. Wie angegeben, ist in dieser Stellung der Arbeitsanschluss A über die dritte Kolben-Ringnut 242 mit dem Zulaufanschluss P strömungstechnisch verbunden, während der Arbeitsanschluss B über
die zweite Kolben-Ringnut 241 und die zugehörigen ersten Kolben-Radialöffnungen 243 mit dem Ablaufanschluss T strömungstechnisch verbunden ist. Zudem wird ein Volumenstrom in der strömungstechnischen Verbindung zwischen dem Pinanschluss Pin und dem Zulaufanschluss P von der zweiten Steuerkante 247 des ersten Ringstegs 245 zunehmend verringert.

Entsprechend der strömungstechnischen Verhältnisse ist der Arbeitsanschluss A maximal mit Druckmittel beaufschlagt, der Pinanschlusses Pin ist geringer mit Druckmittel beaufschlagt.

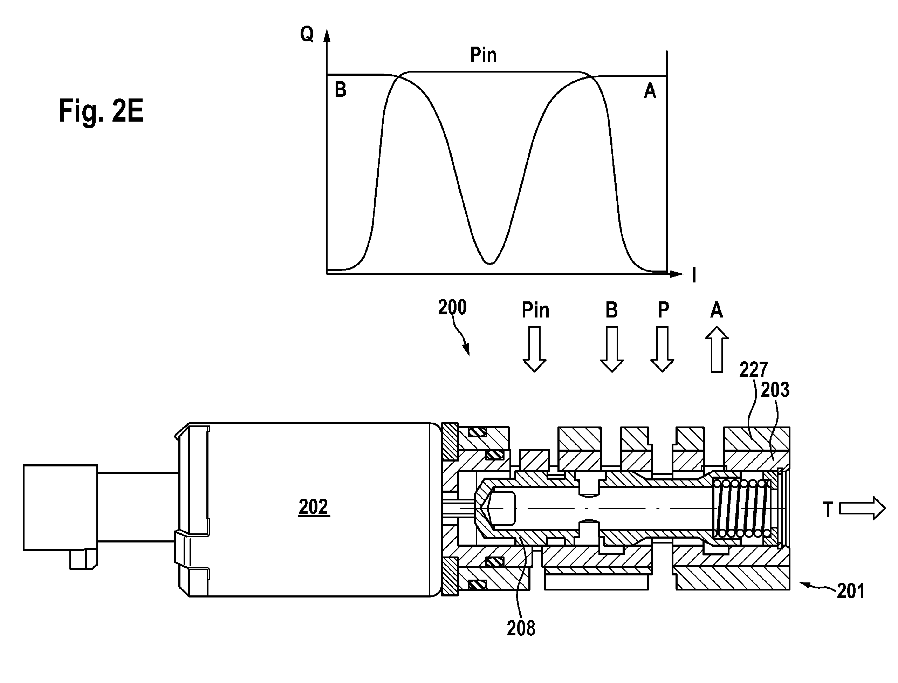

Schließlich ist in Fig. 2E eine weitere Stellung des Steuerkolbens 208 gezeigt, bei welcher der Magnetanker des Elektromagneten 202 mit einem noch stärkeren Strom der Stromstärke I4 (I4>I3) bestromt wird, so dass der Steuerkolben 208 durch die Einwirkung des Ventilstößels 214 entsprechend einer maximalen Auslenkung noch weiter entgegen der Federkraft der Schraubendruckfeder 215 verschoben wird. Wie angegeben, ist in dieser Stellung der Arbeitsanschluss A über die dritte Kolben-Ringnut 242 mit dem Zulaufanschluss P strömungstechnisch verbunden, während der Arbeitsanschluss B über die zweite Kolben-Ringnut 241 und die zugehörigen ersten Kolben-Radialöffnungen 243 mit dem Ablaufanschluss T strömungstechnisch verbunden ist. Zudem ist der Pinanschluss Pin, gesteuert über die erste Steuerkante 246, über die Ringausnehmung 244 und die zweiten Kolben-Radialöffnungen 255 mit dem Ablaufanschluss T strömungstechnisch verbunden.

Entsprechend der strömungstechnischen Verhältnisse ist der Arbeitsanschluss A maximal mit Druckmittel beaufschlagt, während der Pinanschluss nicht beaufschlagt ist (Volumenstrom Null). Diese Stellung des Steuerkolbens 208 kann für eine Frühverstellung des Innenrotors relativ zum Außenrotor eingesetzt werden, wobei der Pin zur drehfesten Verriegelung von Außen- und Innenrotor bei Erreichen der Basisposition verriegeln kann.

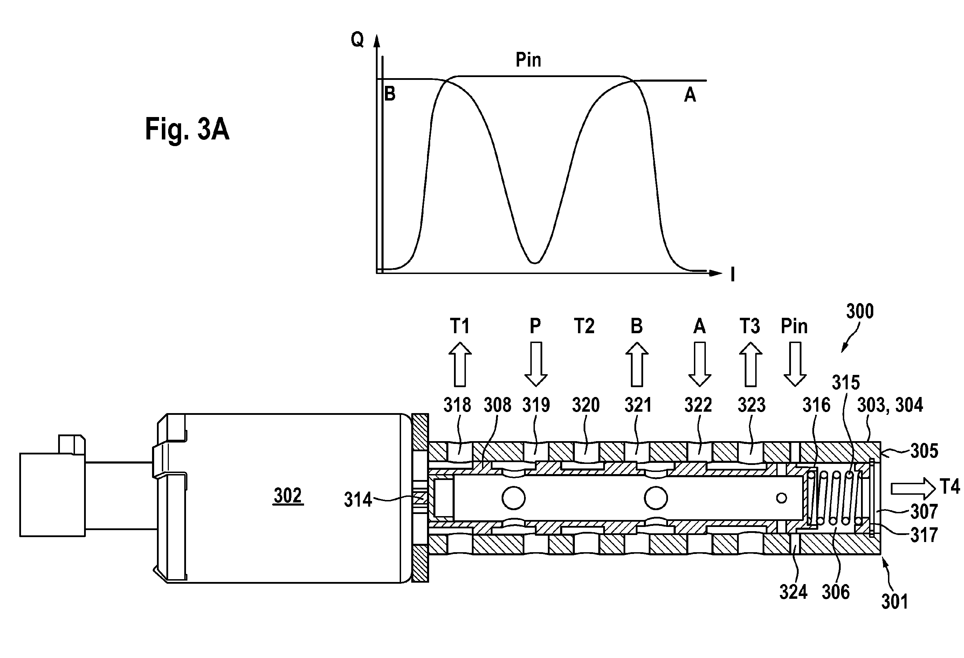

Somit ermöglicht auch das Steuerventil 200 sowohl bei hydraulischer Spätverstellung als auch bei hydraulischer Frühverstellung des Innenrotors gegenüber dem Außenrotor eine drehfeste Verriegelung von Außen- und Innenrotor in einer gegenüber der Spätstellung in Richtung "früh" versetzten Basisposition. Es seien nun die Figuren 3A-3E betrachtet, worin jeweils Axialschnittansichten eines Beispiels für ein erfindungsgemäßes Steuerventil gezeigt sind.

Demnach setzt sich das Steuerventil 300 aus einem (hydraulischen) Ventilteil 301 und einem zur Betätigung des Ventilteils 301 dienenden Elektromagneten 302 zusammen. Der Ventilteil 301 umfasst ein im Wesentlichen hohlzylindrisches Ventilgehäuse 303 mit einem in Axialrichtung sich erstreckenden Gehäusemantel 304, der eine senkrecht zur Axialrichtung angeordnete Gehäusestirnseite 305 aufweist. Der Gehäusemantel 304 formt einen einseitig offenen Gehäusehohlraum 306 mit einer axialen Gehäusehohlraumöffnung 307.
Koaxial zum Ventilgehäuse 303 ist im Gehäusehohlraum 306 ein im Wesentlichen hohlzylindrischer Steuerkolben 308 axial verschiebbar aufgenommen. Der in Form eines Hohlkolbens ausgebildete Steuerkolben 308 umfasst einen in Axialrichtung sich erstreckenden Kolbenmantel 309 und als Endabschnitt einen senkrecht zur Axialrichtung angeordneten ersten Kolbenboden 310 und zweiten Kolbenboden 312. Der Kolbenmantel 309 und die beiden Kolbenböden 310, 312 umgrenzen gemeinsam einen axial geschlossenen Kolbenhohlraum 311. Der Kolbenmantel 309 ist in seiner radialen Abmessung dem Innenumfang des Gehäusemantels 304 angepasst.

An der in den Fig. 3A-3E linken Stirnfläche 313 des ersten Kolbenbodens 310 des Steuerkolbens 108 greift ein Ventilstößel 314 an, der an einem nicht dargestellten Magnetanker des Elektromagneten 302 starr befestigt ist. Wenn der Magnetanker bestromt wird, wird der Ventilstößel 314 in axialer Richtung zum hydraulischen Ventilteil 301 verschoben und verstellt hierbei den Steuerkolben 308 in axialer Richtung entgegen der Federkraft einer Schraubendruckfeder 315. Die Schraubendruckfeder 315 stützt sich zu diesem Zweck mit ihrem einen Ende an einer ersten Ringstufe 316 des Steuerkolbens 308 und mit ihrem anderen Ende an einer zweiten Ringstufe 317 des Ventilgehäuses 303 ab. Wird der Magnetanker nicht bestromt, stellt die Schraubendruckfeder 315 den Steuerkolben 308 in seine Ausgangslage zurück (in den Figuren 3A-3E nach links).

In den Gehäusemantel 304 des Ventilgehäuses 303 sind sieben axial voneinander beabstandete Gehäuse-Radialöffnungen 318-324 eingearbeitet, die jeweils in den Gehäusehohlraum 306 münden.

Entsprechend der in den Figuren 3A-3E angegebenen Anschlussbelegung dient
- eine erste Gehäuse-Radialöffnung 318 als (erster) radialer Ablaufanschluss T1 zur Verbindung mit einem Druckmitteltank,
- eine zweite Gehäuse-Radialöffnung 319 als Zulaufanschluss P zur Verbindung mit einer Druckmittelpumpe,
- eine dritte Gehäuse-Radialöffnung 320 als (zweiter) radialer Ablaufanschluss T2 zur Verbindung mit dem Druckmitteltank,
- eine vierte Gehäuse-Radialöffnung 321 als Arbeitsanschluss B zur Verbindung mit den, den Innenrotor gegenüber dem Außenrotor in Richtung "spät" verstellenden Druckkammern B,
- eine fünfte Gehäuse-Radialöffnung 322 als Arbeitsanschluss A zur Verbindung mit den, den Innenrotor gegenüber dem Außenrotor in Richtung "früh" verstellenden Druckkammern A,
- eine sechste Gehäuse-Radialöffnung 323 als (dritter) radialer Ablaufanschluss T3 zur Verbindung mit dem Druckmitteltank,
- eine siebte Gehäuse-Radialöffnung 324 als Pinanschluss Pin zur Verbindung mit dem wenigstens einen Pin der Verriegelungseinrichtung.

Weiterhin dient die axiale Gehäusehohlraumöffnung 307 als (vierter) axialer Ablaufanschluss T4 zur Verbindung mit einem Druckmitteltank.

In eine Kolben-Außenumfangsfläche 325 des Kolbenmantels 309 sind vier axial voneinander beabstandete, umlaufende Kolben-Ringnuten eingearbeitet, nämlich eine erste Kolben-Ringnut 326, eine zweite Kolben-Ringnut 327, eine dritte Kolben-Ringnut 328 und eine vierte Kolben-Ringnut 329. In die erste Kolben-Ringnut 326 und die dritte Kolben-Ringnut 328 sind jeweils gleichmäßig um den Umfang verteilte, erste bzw. zweite Kolben-Radialöffnungen 330, 331 eingearbeitet, die in den Kolbenhohlraum 311 münden. Zudem sind in die Kolben-Außenumfangsfläche 325, angrenzend an den ersten Kolbenboden 310, eine erste Ringausnehmung 332 und, angrenzend an den zweiten Kolbenboden 312, eine zweite Ringausnehmung 333 eingearbeitet.

Durch die erste Ringausnehmung 332 und die erste Kolben-Ringnut 326 ist ein erster Ringsteg 334 geformt. Durch die erste Kolben-Ringnut 326 und die zweite Kolben-Ringnut 327 ist ein zweiter Ringsteg 335 geformt. Durch die zweite Kolben-Ringnut 327 und die dritte Kolben-Ringnut 328 ist ein dritter Ringsteg 336 geformt, der mit einer ersten Steuerkante 340 und einer zweiten Steuerkante 341 versehen ist. Durch die dritte Kolben-Ringnut 328 und die vierte Kolben-Ringnut 329 ist ein vierter Ringsteg 337 geformt, der mit einer dritten Steuerkante 342 und einer vierten Steuerkante 343 versehen ist. Durch die vierte Kolben-Ringnut 329 und die zweite Ringausnehmung 333 ist ein fünfter Ringsteg 338 geformt, der mit einer fünften Steuerkante 344 und einer sechsten Steuerkante 345 versehen ist. Zudem weist der fünfte Ringsteg 338 dritte Kolben-Radialöffnungen 339 auf, die jeweils in den Kolbenhohlraum 311 münden.

Die ersten bis fünften Ringstege 334-338 dienen insbesondere zur axialen Führung des Steuerkolbens 308 innerhalb des Ventilgehäuses 303.

Der erste Ringsteg 334 und der zweite Ringsteg 335 steuern keine Druckmittelkanäle, sondern dienen lediglich zur axialen Begrenzung der ersten Kolben-Ringnut 326. Die erste Kolben-Ringnut 326 verbindet in jeder Stellung des Steuerkolbens 308 den Zulaufanschluss P mit dem Kolbenhohlraum 311. Die erste Ringausnehmung 332 verbindet in jeder Stellung des Steuerkolbens 308 den Ablaufanschluss T1 mit dem Gehäusehohlraum 306.

Die Umfangsfläche des dritten Ringstegs 336 ist so geformt, dass sie den Arbeitsanschluss B dichtend überdecken bzw. freigeben kann, um auf diese Weise über eine Änderung der Öffnungsquerschnitte der vierten Gehäuse-Radialöffnungen 321 die Menge an durchfließendem Druckmittel zu regeln, wobei eine Einstellung der Öffnungsquerschnitte über die erste Steuerkante 340 und die zweite Steuerkante 341 des dritten Ringstegs 336 erfolgt. Hierbei ist durch die erste Steuerkante 340 ein durch die zweite Kolben-Ringnut 327 geformter Druckmittelkanal zum Ablaufanschluss T2 und durch die zweite Steuerkante 341 ein durch die dritte Kolben-Ringnut 328 und die zweiten Kolben-Radialöffnungen 331 geformter Druckmittelkanal zum Zulaufanschluss P steuerbar.

Die Umfangsfläche des vierten Ringstegs 337 ist so geformt, dass sie bei axialer Verschiebung des Steuerkolbens 308 den Arbeitsanschluss A dichtend überdecken oder freigeben kann, um auf diese Weise über eine Änderung der Öffnungsquerschnitte der fünften Gehäuse-Radialöffnungen 322 die Durchflussmenge von Druckmittel zu regeln, wobei eine Einstellung der Öffnungsquerschnitte der fünften Gehäuse-Radialöffnungen 333 über die dritte Steuerkante 342 und die vierte Steuerkante 343 des vierten Ringstegs 337 erfolgt. Hierbei ist durch die dritte Steuerkante 342 ein durch die dritte Kolben-Ringnut 328 und die zweiten Kolben-Radialöffnungen 331 geformter Druckmittelkanal zum Zulaufanschluss P und durch die vierte Steuerkante 343 ein durch die vierte Kolben-Ringnut 329 geformter Druckmittelkanal zum Ablaufanschluss T3 steuerbar.

Die Umfangsfläche des fünften Ringstegs 338 ist so geformt, dass sie bei axialer Verschiebung des Steuerkolbens 308 den Pinanschluss Pin dichtend überdecken oder freigeben kann, um auf diese Weise über eine Änderung der Öffnungsquerschnitte des siebten Radialöffnungen 324 die Durchflussmenge von Druckmittel zu regeln, wobei eine Einstellung der Öffnungsquerschnitte über die fünfte Steuerkante 344 und die sechste Steuerkante 345 des fünften Ringstegs 338 erfolgt. Hierbei ist durch die fünfte Steuerkante 344 ein durch die vierte Kolben-Ringnut 329 geformter Druckmittelkanal zum dritten Ablaufanschluss T3 und die sechste Steuerkante 345 ein durch die zweite Ringausnehmung 333 und den Gehäusehohlraum 306 geformter Druckmittelkanal zum Ablaufanschluss T4 steuerbar. Zudem kann die dritten Kolben-Radialöffnung 339 mit der siebten Gehäuse-Radialöffnung 324 verbunden werden.

Somit kann in der in den Figuren 3A-3E gezeigten Anschlussbelegung durch Axialverschiebung des Steuerkolbens 308 wahlweise eine strömungstechnische Verbindung zwischen
- dem Arbeitsanschluss B und dem Zulaufanschluss P oder dem Ablaufanschluss T2,
- dem Arbeitsanschluss A und dem Zulaufanschluss P oder dem Ablaufanschluss T3,
- dem Pinanschluss Pin und dem Zulaufanschluss P oder dem Ablaufanschluss T4,
gesteuert werden.

Es werden nun verschiedene Stellungen des Steuerkolbens 308 anhand der Fig. 3A-3E erläutert, wobei in den Figuren 3A-3E (analog zu den Fig. 1A-1E) jeweils anhand eines Diagramms ein qualitativer Verlauf der Volumenstrom-Kennlinie des Steuerventils 300 dargestellt ist.

In Fig. 3A ist eine Stellung des Steuerkolbens 308 gezeigt, bei welcher der Magnetanker des Elektromagneten 302 nicht bestromt ist. Wie durch die entsprechenden Pfeile angegeben, ist in dieser Stellung des Steuerkolbens 308 der Arbeitsanschluss B über die dritte Kolben-Ringnut 328 und die zweiten Kolben-Radialöffnungen 321 mit dem Zulaufanschluss P strömungstechnisch verbunden, während der Arbeitsanschluss A über die vierte Kolben-Ringnut 329 mit dem Ablaufanschluss T3 strömungstechnisch verbunden ist. Zudem ist der Pinanschlusses Pin über die zweite Ringausnehmung 333 mit dem Ablaufanschluss T4 strömungstechnisch verbunden.

Entsprechend der strömungstechnischen Verhältnisse ist der Arbeitsanschluss B in dieser Stellung des Steuerkolbens 308 maximal mit Druckmittel beaufschlagt, während sowohl der Arbeitsanschluss A als auch der Pinanschluss Pin nicht beaufschlagt sind (Volumenstrom Null). Diese Stellung des Steuerkolbens 308 kann zur Spätverstellung des Innenrotors relativ zum Außenrotor genutzt werden, wobei beim Passieren der Basisposition der Pin zur drehfesten Verriegelung von Außen- und Innenrotor verriegeln kann.

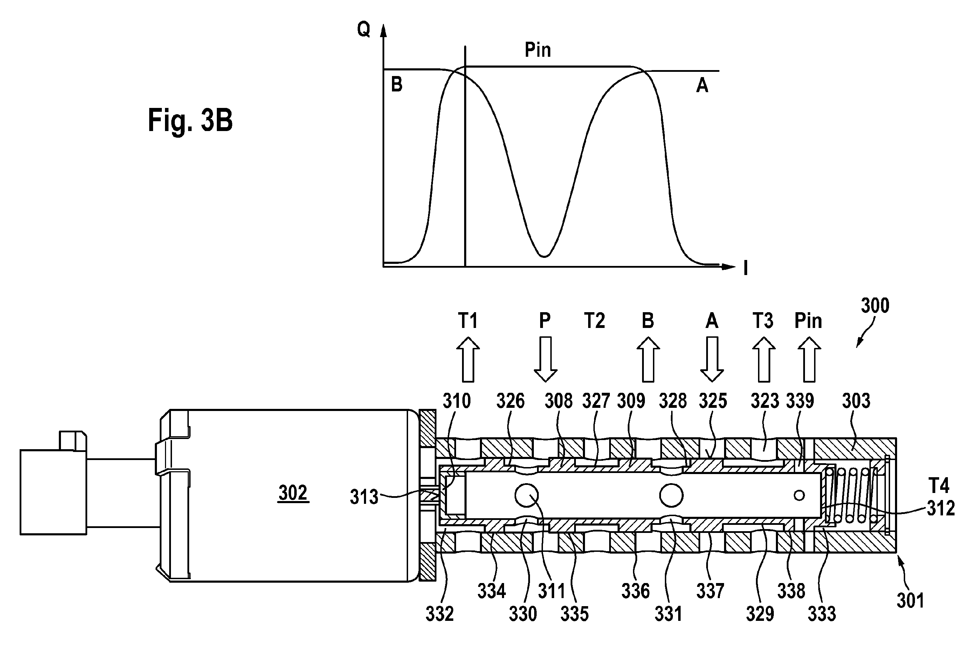

In Fig. 3B ist eine weitere Stellung des Steuerkolbens 308 gezeigt, bei welcher der Magnetanker des Elektromagneten 302 mit einem von Null verschiedenen Strom der Stärke I1 bestromt wird, so dass der Steuerkolben 308 durch die Einwirkung des Ventilstößels 314 entgegen der Federkraft der Schraubendruckfeder 315 (in den Figuren 3A-3E nach rechts) verschoben wird. Wie durch die entsprechenden Pfeile angegeben, ist in dieser Stellung der Arbeitsanschluss B über die dritte Kolben-Ringnut 328 und die zweiten Kolben-Radialöffnungen 321 mit dem Zulaufanschluss P strömungstechnisch verbunden, während der Arbeitsanschluss A über die vierte Kolben-Ringnut 329 mit dem Ablaufanschluss T3 strömungstechnisch verbunden ist. Der Pinanschluss Pin ist nun vom Ablaufanschluss T4 getrennt und anstelle dessen über die dritten Kolben-Radialöffnungen 339 mit dem Zulaufanschluss P strömungstechnisch verbunden.

Entsprechend der strömungstechnischen Verhältnisse ist der Arbeitsanschluss B weiterhin maximal mit Druckmittel beaufschlagt, während der Volumenstrom des Pinanschlusses Pin stark ansteigt.

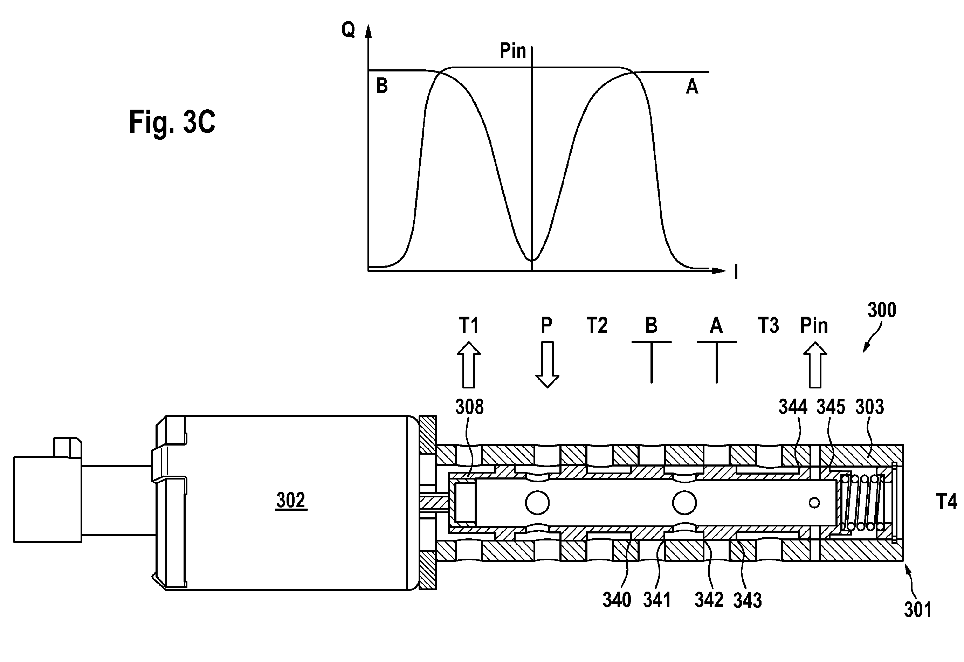

In Fig. 3C ist eine weitere Stellung des Steuerkolbens 308 gezeigt, bei welcher der Magnetanker des Elektromagneten 302 mit einem stärkeren Strom der Stromstärke I2 (I2>I1) bestromt wird, so dass der Steuerkolben 308 durch die Einwirkung des Ventilstößels 314 noch weiter entgegen der Federkraft der Schraubendruckfeder 315 verschoben wird. In dieser Stellung sind der Arbeitsanschluss A und der Arbeitsanschluss B sowohl vom Zulaufanschluss P als auch von den Ablaufanschlüssen T2 bzw. T3 getrennt. Zugleich ist der Pinanschluss Pin über die dritten Kolben-Radialöffnungen 339 mit dem Zulaufanschluss P strömungstechnisch verbunden.

Entsprechend dieser strömungstechnischen Verhältnisse haben die beiden Arbeitsanschlüsse A und B in der Volumenstrom-Kennlinie einen sich aus Leckströmen ergebenden minimalen Volumenstrom, während der Pinanschluss Pin maximal mit Druckmittel beaufschlagt ist. Diese Stellung des Steuerkolbens 308 kann zum Fixieren einer Phasenlage zwischen Außen- und Innenrotor eingesetzt werden.

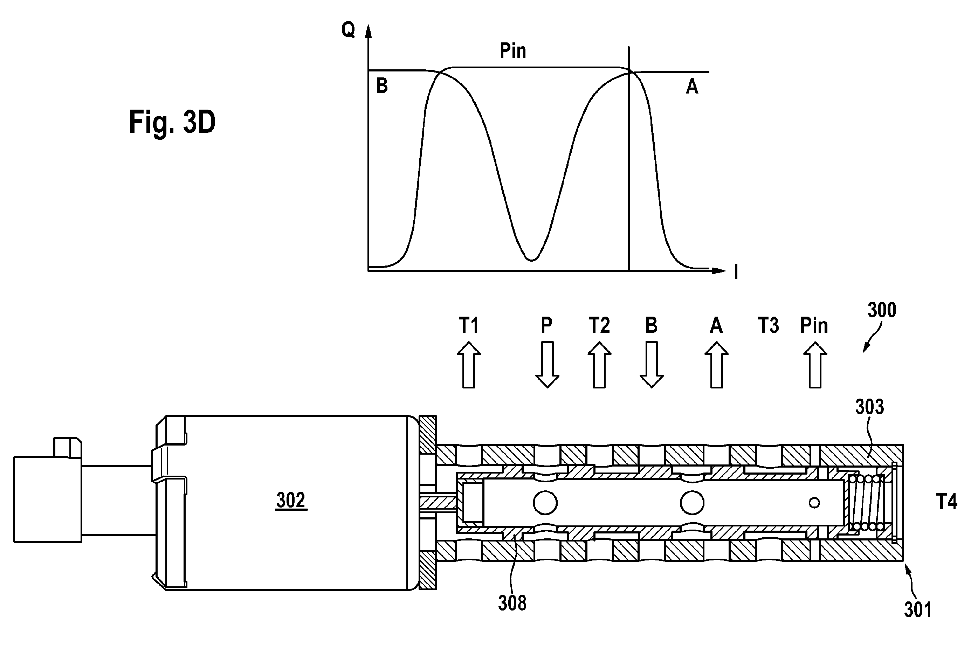

In Fig. 3D ist eine weitere Stellung des Steuerkolbens 308 gezeigt, bei welcher der Magnetanker des Elektromagneten 102 mit einem noch stärkeren Strom der Stromstärke I3 (I3>I2) bestromt wird, so dass der Steuerkolben 308 durch die Einwirkung des Ventilstößels 314 noch weiter entgegen der Federkraft der Schraubendruckfeder 315 verschoben wird. Wie angegeben, ist in dieser Stellung der Arbeitsanschluss A über die dritte Kolben-Ringnut 328 und die zweiten Kolben-Radialöffnungen 321 mit dem Zulaufanschluss P strömungstechnisch verbunden, während der Arbeitsanschluss B über die zweite Kolben-Ringnut 327 mit dem Ablaufanschluss T2 strömungstechnisch verbunden ist. Zudem wird ein Volumenstrom in der strömungstechnischen Verbindung zwischen dem Pinanschluss Pin und dem Zulaufanschluss P durch axiales Versetzen der dritten Kolben-Radialöffnungen 339 gegenüber der siebten Gehäuse-Radialöffnungen 324 zunehmend verringert.

Entsprechend der strömungstechnischen Verhältnisse ist der Arbeitsanschluss A maximal mit Druckmittel beaufschlagt, der Pinanschlusses Pin ist geringer beaufschlagt.

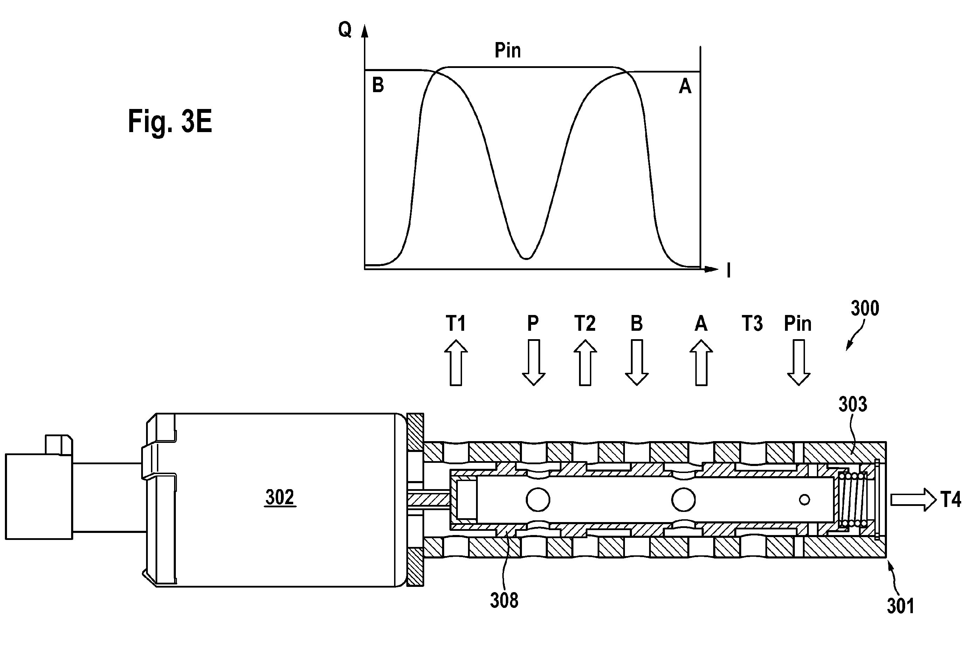

Schließlich ist in Fig. 3E eine weitere Stellung des Steuerkolbens 308 gezeigt, bei welcher der Magnetanker des Elektromagneten 302 mit einem noch stärkeren Strom der Stromstärke I4 (I4>I3) bestromt wird, so dass der Steuerkolben 308 durch die Einwirkung des Ventilstößels 314 entsprechend einer maximalen Auslenkung noch weiter entgegen der Federkraft der Schraubendruckfeder 315 verschoben wird. Wie angegeben, ist in dieser Stellung der Arbeitsanschluss A über die dritte Kolben-Ringnut 328 und die zweiten Kolben-Radialöffnungen 321 mit dem Zulaufanschluss P strömungstechnisch verbunden, während der Arbeitsanschluss B über die zweite Kolben-Ringnut 327 mit dem Ablaufanschluss T2 strömungstechnisch verbunden ist. Zudem ist der Pinanschluss Pin über die vierte Kolben-Ringnut 329 mit dem Ablaufanschluss T3 strömungstechnisch verbunden.

Entsprechend der strömungstechnischen Verhältnisse ist der Arbeitsanschluss A maximal mit Druckmittel beaufschlagt, während der Pinanschluss Pin nicht beaufschlagt ist. Diese Stellung des Steuerkolbens 308 kann für eine Frühverstellung des Innenrotors relativ zum Außenrotor eingesetzt werden, wobei der Pin zur drehfesten Verriegelung von Außen- und Innenrotor bei Erreichen der Basisposition verriegeln kann.

Das Steuerventil 300 ermöglicht somit sowohl bei hydraulischer Spätverstellung als auch bei hydraulischer Frühverstellung des Innenrotors gegenüber dem Außenrotor eine drehfeste Verriegelung von Außen- und Innenrotor in einer gegenüber der Spätstellung in Richtung "früh" versetzten Basisposition.

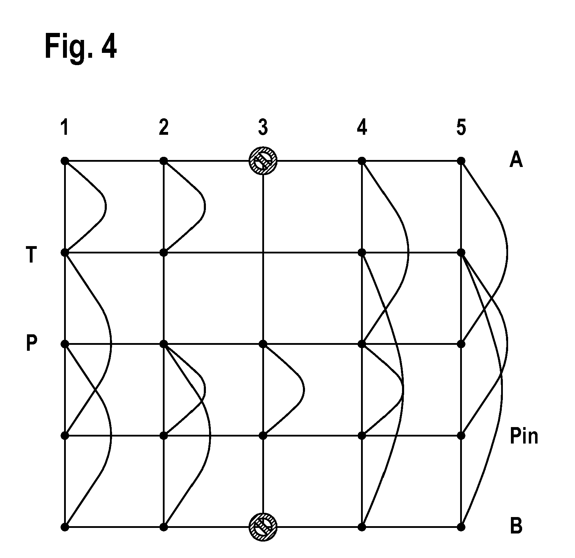

In Fig. 4 ist eine den in den Figuren 1A-1E, 2A-2E und 3A-3E gezeigten Steuerventilen gemeinsame Schaltlogik in einem matrixartigen Diagramm veranschaulicht. In dem Diagramm sind auf der linken vertikalen Achse Ablaufanschluss T und Zulaufanschluss P, auf der rechten vertikalen Achse Arbeitsanschluss A, Arbeitsanschluss B und Pinanschluss Pin dargestellt. Die horizontale Achse symbolisiert die verschiedenen Schaltstellungen der Steuerventile. Die Linien kennzeichnen jeweils eine strömungstechnische Verbindung zwischen den durch die Linie verbundenen Anschlüssen. Der durchgestrichene Kreis symbolisiert eine gesperrte strömungstechnische Verbindung.

Demnach ist jedes der Steuerventile durch fünf verschiedene Schaltstellungen des Steuerkolbens charakterisiert. In einer ersten Stellung des Steuerkolbens (in Fig. 4 mit "1" bezeichnet) ist der Arbeitsanschluss A mit dem Ablaufanschluss T, der Arbeitsanschluss B mit dem Zulaufanschluss P und der Pinanschluss Pin mit dem Ablaufanschluss T strömungstechnisch verbunden. In einer zweiten Stellung des Steuerkolbens (in Fig. 4 mit "2" bezeichnet) ist der Arbeitsanschluss A mit dem Ablaufanschluss T, der Arbeitsanschluss B mit dem Zulaufanschluss P und der Pinanschluss Pin mit dem Zulaufanschluss P strömungstechnisch verbunden. In einer dritten Stellung des Steuerkolbens (in Fig. 4 mit "3" bezeichnet) ist der Arbeitsanschluss A weder mit Zulaufanschluss P noch mit dem Ablaufanschluss T strömungstechnisch verbunden (gesperrt), der Arbeitsanschluss B weder mit Zulaufanschluss P noch mit dem Ablaufanschluss T strömungstechnisch verbunden (gesperrt), und der Pinanschluss Pin mit dem Zulaufanschluss P strömungstechnisch verbunden. In einer vierten Stellung des Steuerkolbens (in Fig. 4 mit "4" bezeichnet) ist der Arbeitsanschluss A mit dem Zulaufanschluss P, der Arbeitsanschluss B mit dem Ablaufanschluss T und der Pinanschluss Pin mit dem Zulaufanschluss P strömungstechnisch verbunden. In einer fünften Stellung des Steuerkolbens (in Fig. 4 mit "5" bezeichnet) ist der Arbeitsanschluss A mit dem Zulaufanschluss P, der Arbeitsanschluss B mit dem Ablaufanschluss T und der Pinanschluss Pin mit dem Ablaufanschluss T strömungstechnisch verbunden.

Die fünf verschiedenen Stellungen des Steuerkolbens genügen für eine Druckmittelsteuerung in einem hydraulischen Nockenwellenversteller, wobei in
- Stellung "1": das Abtriebsteil gegenüber dem Antriebsteil hydraulisch in Richtung "spät" verstellt werden kann und der mit dem Ablaufanschluss T verbundene Pin zur drehfesten Verriegelung von An- und Abtriebsteil in Basisposition verriegeln kann;
- Stellung "2": das Abtriebsteil gegenüber dem Antriebsteil hydraulisch in Richtung "spät" verstellt werden kann und der mit dem Zulaufanschluss P verbundene Pin in seine Aufnahme zurückgedrängt wird, so dass eine Änderung der Phasenlage zwischen An- und Abtriebsteil ermöglicht und eine drehfeste Verriegelung von An- und Abtriebsteil in Basisposition verhindert wird;
- Stellung "3": das Abtriebsteil gegenüber dem Antriebsteil hydraulisch verspannt werden kann und der mit dem Zulaufanschluss P verbundene Pin in seine Aufnahme zurückgedrängt wird, so dass eine drehfeste Verriegelung von An- und Abtriebsteil verhindert wird;
- Stellung "4": das Abtriebsteil gegenüber dem Antriebsteil hydraulisch in Richtung "früh" verstellt werden kann und der mit dem Zulaufanschluss P verbundene Pin in seine Aufnahme zurückgedrängt wird, so dass eine Änderung der Phasenlage zwischen An- und Abtriebsteil ermöglicht und eine drehfeste Verriegelung von An- und Abtriebsteil in Basisposition verhindert wird;
- Stellung "5": das Abtriebsteil gegenüber dem Antriebsteil hydraulisch in Richtung "früh" verstellt werden kann und der mit dem Ablaufanschluss T verbundene Pin zur drehfesten Verriegelung von An- und Abtriebsteil in Basisposition verriegeln kann.

Somit kann in den in den Ausführungsbeispielen gezeigten Steuerventilen der Pin zur drehfesten Verriegelung von An- und Abtriebsteil sowohl bei einer hydraulischen Verstellung des Abtriebsteils gegenüber dem Antriebsteil in Richtung "spät" als auch in Richtung "früh" in Basisposition verriegeln, so dass auf zusätzliche Vorkehrungen zum Bewegen des Abtriebsteils in Basisposition in vorteilhafter Weise verzichtet werden kann.

Obgleich in den Ausführungsbeispielen ein Verschiebungsmechanismus veranschaulicht ist, bei dem der Steuerkolben durch einen mittels eines Elektromagneten betätigten Ventilstößel verschoben wird, kann gleichermaßen ein anderer Aktuator zu Betätigung des Ventilstößels, wie beispielsweise ein elektrischer Stellmotor, vorgesehen sein.

Obgleich die hydraulischen Ventilteile bzw. Steuerventile in der Verwendung zur Druckmittelsteuerung für einen hydraulischen Nockenwellenversteller einer Brennkraftmaschine beschrieben wurden, können diese gleichermaßen in jedem anderen hydraulischen Phasensteller einer Brennkraftmaschine eingesetzt werden.

### Bezugszeichenliste

- 100: Steuerventil
- 101: hydraulischer Ventilteil
- 102: Elektromagnet
- 103: Ventilgehäuse
- 104: Gehäusemantel
- 105: Gehäuseboden
- 106: Gehäusehohlraum
- 107: Gehäusehohlraumöffnung
- 108: Steuerkolben
- 109: Kolbenmantel
- 110: Kolbennase
- 111: Kolbenhohlraum
- 112: Kolbenhohlraumöffnung
- 113: Stirnfläche
- 114: Ventilstößel
- 115: Schraubendruckfeder
- 116: erste Ringstufe
- 117: zweite Ringstufe
- 118: Gehäuse-Außenumfangsfläche
- 119: erste Gehäuse-Ringnut
- 120: zweite Gehäuse-Ringnut
- 121: dritte Gehäuse-Ringnut
- 122: vierte Gehäuse-Ringnut
- 123: fünfte Gehäuse-Ringnut
- 124: sechste Gehäuse-Ringnut
- 125: erste Gehäuse-Radialöffnung
- 126: zweite Gehäuse-Radialöffnung
- 127: dritte Gehäuse-Radialöffnung
- 128: vierte Gehäuse-Radialöffnung
- 129: fünfte Gehäuse-Radialöffnung
- 130: sechste Gehäuse-Radialöffnung
- 131: Kolben-Außenumfangsfläche
- 132: Kolbenausnehmung
- 133: erste Kolben-Ringnut
- 134: zweite Kolben-Ringnut
- 135: dritte Kolben-Ringnut
- 136: vierte Kolben-Ringnut
- 137: erste Kolben-Radialöffnung
- 138: zweite Kolben-Radialöffnung
- 139: dritte Kolben-Radialöffnung
- 140: erster Ringsteg
- 141: zweiter Ringsteg
- 142: dritter Ringsteg
- 143: vierter Ringsteg
- 144: fünfter Ringsteg
- 145: erste Steuerkante
- 146: zweite Steuerkante
- 147: dritte Steuerkante
- 148: vierte Steuerkante
- 149: fünfte Steuerkante
- 150: sechste Steuerkante
- 151: siebte Steuerkante
- 152: achte Steuerkante

- 200: Steuerventil
- 201: Ventilteil
- 202: Elektromagnet
- 203: Ventilgehäuse
- 204: Gehäusemantel
- 205: Gehäusesockel
- 206: Gehäusehohlraum
- 207: Gehäusehohlraumöffnung
- 208: Steuerkolben
- 209: Kolbenmantel
- 210: Kolbenboden
- 211: Kolbenhohlraum
- 212: Kolbenhohlraumöffnung
- 213: Stirnfläche
- 214: Ventilstößel
- 215: Schraubendruckfeder
- 216: erste Ringstufe
- 217: zweite Ringstufe
- 218: Gehäuse-Außenumfangsfläche
- 219: erste Gehäuse-Radialöffnung
- 220: zweite Gehäuse-Radialöffnung
- 221: dritte Gehäuse-Radialöffnung
- 222: vierte Gehäuse-Radialöffnung
- 223: fünfte Gehäuse-Radialöffnung
- 224: sechste Gehäuse-Radialöffnung
- 225: siebte Gehäuse-Radialöffnung
- 226: Hülsenhohlraum
- 227: Ventilhülse
- 228: erste Hülse-Radialöffnung
- 229: zweite Hülse-Radialöffnung
- 230: dritte Hülse-Radialöffnung
- 231: vierte Hülse-Radialöffnung
- 232: fünfte Hülse-Radialöffnung
- 233: sechste Hülse-Radialöffnung
- 234: Hülse-Außenumfangsfläche
- 235: Axialnut
- 236: erste Gehäuse-Ringnut
- 237: zweite Gehäuse-Ringnut
- 238: Gehäuse-Innenumfangsfläche
- 239: Kolben-Außenumfangsfläche
- 240: erste Kolben-Ringnut
- 241: zweite Kolben-Ringnut
- 242: dritte Kolben-Ringnut
- 243: erste Kolben-Radialöffnung
- 244: Ringausnehmung
- 245: erster Ringsteg
- 246: erste Steuerkante
- 247: zweite Steuerkante
- 248: zweiter Ringsteg
- 249: dritte Steuerkante
- 250: dritter Ringsteg
- 251: vierte Steuerkante
- 252: vierter Ringsteg
- 253: fünfte Steuerkante
- 254: sechste Steuerkante
- 255: zweite Kolben-Radialöffnung

- 300: Steuerventil
- 301: Ventilteil
- 302: Elektromagnet
- 303: Ventilgehäuse
- 304: Gehäusemantel
- 305: Gehäusestirnseite
- 306: Gehäusehohlraum
- 307: Gehäusehohlraumöffnung
- 308: Steuerkolben
- 309: Kolbenmantel
- 310: erster Kolbenboden
- 311: Kolbenhohlraum
- 312: zweiter Kolbenboden
- 313: Stirnfläche
- 314: Ventilstößel
- 315: Schraubendruckfeder
- 316: erste Ringstufe
- 317: zweite Ringstufe
- 318: erste Gehäuse-Radialöffnung
- 319: zweite Gehäuse-Radialöffnung
- 320: dritte Gehäuse-Radialöffnung
- 321: vierte Gehäuse-Radialöffnung
- 322: fünfte Gehäuse-Radialöffnung
- 323: sechste Gehäuse-Radialöffnung
- 324: siebte Gehäuse-Radialöffnung
- 325: Kolben-Außenumfangsfläche
- 326: erste Kolben-Ringnut
- 327: zweite Kolben-Ringnut
- 328: dritte Kolben-Ringnut
- 329: vierte Kolben-Ringnut
- 330: erste Kolben-Radialöffnung
- 331: zweite Kolben-Radialöffnung
- 332: erste Ringausnehmung
- 333: zweite Ringausnehmung
- 334: erster Ringsteg
- 335: zweiter Ringsteg
- 336: dritter Ringsteg
- 337: vierter Ringsteg
- 338: fünfter Ringsteg

- 339: dritte Kolben-Radialöffnung
- 340: erste Steuerkante
- 341: zweite Steuerkante
- 342: dritte Steuerkante
- 343: vierte Steuerkante
- 344: fünfte Steuerkante
- 345: sechste Steuerkante

## Patentansprüche

1. Steuerventil (300) zur Steuerung von Druckmittelströmen, welches umfasst:
ein zylindrisches Ventilgehäuse (303) mit einem einseitig offenen Gehäusehohlraum (306), welches mit einem axialen Ablaufanschluss (T4), einem radialen ersten Arbeitsanschluss (B), einem radialen zweiten Arbeitsanschluss (A), einem radialen dritten Arbeitsanschluss (Pin), einem radialen Druckanschluss (P) und drei radialen Ablaufanschlüssen (T1-T3) versehen ist, die jeweils in den Gehäusehohlraum (306) münden, wobei in Axialrichtung der Druckanschluss (P) zwischen dem einem ersten radialen Ablaufanschluss (T1) und einem zweiten radialen Ablaufanschluss (T2), der erste Arbeitsanschluss (B) und der zweite Arbeitsanschluss (A) zwischen dem zweiten radialen Ablaufanschluss (T2) und einem dritten radialen Ablaufanschluss (T3) angeordnet ist, ein im Gehäusehohlraum (306) axial verschiebbar aufgenommener zylindrischer Steuerkolben (308) mit einem Kolbenhohlraum (311), wobei der Steuerkolben (108) so ausgebildet ist, dass durch dessen Axialverschiebung - der erste Arbeitsanschluss (B) wahlweise mit dem Druckanschluss (P) und dem zweiten radialen Ablaufanschluss (T2) fluidleitend verbindbar ist,
- der zweite Arbeitsanschluss (A) wahlweise mit dem Druckanschluss (P) und dem dritten radialen Ablaufanschluss (T3) fluidleitend verbindbar ist,
- der dritte Arbeitsanschluss (Pin) wahlweise mit dem Druckanschluss (P) und dem axialen Ablaufanschluss (T4) fluidleitend verbindbar ist, wobei in einer ersten Kolbenstellung der erste Arbeitsanschluss (B) mit dem Druckanschluss (P) und zugleich der dritte Arbeitsanschluss (Pin) mit dem axialen Ablaufanschluss (T4) fluidleitend verbunden ist, und
in einer zweiten Kolbenstellung der zweite Arbeitsanschluss (A) mit dem Druckanschluss (P) und zugleich der dritte Arbeitsanschluss (Pin) mit dem axialen Ablaufanschluss (T4) fluidleitend verbunden ist.

2. Steuerventil (300) nach Anspruch 1, **dadurch gekennzeichnet, dass** der Steuerkolben (308) so ausgebildet ist, dass in einer dritten Kolbenstellung der zweite Arbeitsanschluss (A) mit dem Druckanschluss (P) und zugleich sowohl der erste Arbeitsanschluss (B) mit dem zweiten radialen Ablaufanschluss (T2) als auch der dritte Arbeitsanschluss (Pin) mit dem axialen Ablaufanschluss (T4) fluidleitend verbunden sind.

3. Steuerventil (300) nach einem vorhergehenden Ansprüche 1 oder 2, **dadurch gekennzeichnet, dass** der Steuerkolben (308) so ausgebildet ist, dass in einer vierten Kolbenstellung sowohl der erste Arbeitsanschluss (B) als auch der zweite Arbeitsanschluss (A) gesperrt sind und zugleich der dritte Arbeitsanschluss (Pin) mit dem Druckanschluss (P) fluidleitend verbunden ist.

4. Steuerventil (300) nach einem vorhergehenden Ansprüche 1 bis 3, **dadurch gekennzeichnet, dass** der Steuerkolben (308) so ausgebildet ist, dass in einer fünften Kolbenstellung der erste Arbeitsanschluss (B) mit dem Druckanschluss (P) und zugleich sowohl der zweite Arbeitsanschluss (A) mit dem dritten radialen Ablaufanschluss (T3) als auch der dritte Arbeitsanschluss (Pin) mit dem axialen Ablaufanschluss (T4) fluidleitend verbunden sind.

5. Phasenversteller einer Brennkraftmaschine mit wenigstens einem Steuerventil nach einem der vorhergehenden Ansprüche 1 bis 4.

## Claims

1. Control valve (300) for controlling pressure medium flows, which comprises:
a cylindrical valve housing (303) having a housing cavity (306) which is open at one side and which is provided with an axial outflow port (T4), a radial first working port (B), a radial second working port (A), a radial third working port (Pin), a radial pressure port (P) and three radial outflow ports (T1-T3), which open in each case into the housing cavity (306), wherein in the axial direction, the pressure port (P) is arranged between a first radial outflow port (T1) and a second radial outflow port (T2), the first working port (B) and the second working port (A) are arranged between the second radial outflow port (T2) and a third radial outflow port (T3),
a cylindrical control piston (308) which is held in an axially movable manner in the housing cavity (306) and which has a piston cavity (311), the control piston (308) being designed such that, as a result of the axial displacement thereof,
- the first working port (B) can be connected in fluid-conducting fashion selectively to the pressure port (P) and the second radial outflow port (T2),
- the second working port (A) can be connected in fluid-conducting fashion selectively to the pressure port (P) and the third radial outflow port (T3),
- the third working port (Pin) can be connected in fluid-conducting fashion selectively to the pressure port (P) and the axial outflow port (T4), wherein, in a first piston position, the first working port (B) is connected in fluid-conducting fashion to the pressure port (P) and at the same time the third working port (Pin) is connected in fluid-conducting fashion to the axial outflow port (T4), and,
in a second piston position, the second working port (A) is connected in fluid-conducting fashion to the pressure port (P) and at the same time the third working port (Pin) is connected in fluid-conducting fashion to the axial outflow port (T4).

2. Control valve (300) according to Claim 1, **characterized in that** the control piston (308) is designed such that, in a third piston position, the second working port (A) is connected in fluid-conducting fashion to the pressure port (P) and at the same time both the first working port (B) is connected in fluid-conducting fashion to the second radial outflow port (T2) and also the third working port (Pin) is connected in fluid-conducting fashion to the axial outflow port (T4).

3. Control valve (300) according to one of the preceding Claims 1 and 2, **characterized in that** the control piston (308) is designed such that, in a fourth piston position, both the first working port (B) and also the second working port (A) are blocked and at the same time the third working port (Pin) is connected in fluid-conducting fashion to the pressure port (P).

4. Control valve (300) according to one of the preceding Claims 1 to 3, **characterized in that** the control piston (308) is designed such that, in a fifth piston position, the first working port (B) is connected in fluid-conducting fashion to the pressure port (P) and at the same time both the second working port (A) is connected in fluid-conducting fashion to the third radial outflow port (T3) and also the third working port (Pin) is connected in fluid-conducting fashion to the axial outflow port (T4).

5. Phase adjuster of an internal combustion engine having at least one control valve according to one of the preceding Claims 1 to 4.

## Revendications

1. Soupape de commande (300) pour commander des courants de fluide sous pression, comprenant :
un boîtier de soupape cylindrique (303) avec une cavité de boîtier (306) ouverte d'un côté, qui est pourvu d'un raccord d'écoulement axial (T4), d'un premier raccord de travail radial (B), d'un deuxième raccord de travail radial (A), d'un troisième raccord de travail radial (Pin), d'un raccord de pression radial (P) et de trois raccords d'écoulement radiaux (T1-T3) qui débouchent chacun dans la cavité de boîtier (306),
le raccord de pression (P), dans la direction axiale, étant disposé entre le premier raccord d'écoulement radial (T1) et un deuxième raccord d'écoulement radial (T2), le premier raccord de travail (B) et le deuxième raccord de travail (A) étant disposés entre le deuxième raccord d'écoulement radial (T2) et un troisième raccord d'écoulement radial (T3),
un piston de commande cylindrique (308) reçu de manière déplaçable axialement dans la cavité de boîtier (306) avec une cavité de piston (311), le piston de commande (108) étant réalisé de telle sorte que par son déplacement axial,
- le premier raccord de travail (B) puisse être connecté fluidiquement de manière sélective avec le raccord de pression (P) et le deuxième raccord d'écoulement radial (T2),
- le deuxième raccord de travail (A) puisse être connecté fluidiquement de manière sélective avec le raccord de pression (P) et le troisième raccord d'écoulement radial (T3),
- le troisième raccord de travail (Pin) puisse être connecté fluidiquement de manière sélective avec le raccord de pression (P) et le raccord d'écoulement axial (T4), dans une première position du piston, le premier raccord de travail (B) étant connecté fluidiquement avec le raccord de pression (P) et en même temps le troisième raccord de travail (Pin) étant connecté fluidiquement avec le raccord d'écoulement axial (T4), et
dans une deuxième position du piston, le deuxième raccord de travail (A) étant connecté fluidiquement avec le raccord de pression (P) et en même temps le troisième raccord de travail (Pin) étant connecté fluidiquement avec le raccord d'écoulement axial (T4).

2. Soupape de commande (300) selon la revendication 1, **caractérisée en ce que** le piston de commande (308) est réalisé de telle sorte que dans une troisième position du piston, le deuxième raccord de travail (A) soit connecté fluidiquement au raccord de pression (P) et qu'en même temps à la fois le premier raccord de travail (B) soit connecté fluidiquement au deuxième raccord d'écoulement radial (T2) et le troisième raccord de travail (Pin) soit connecté fluidiquement avec le raccord d'écoulement axial (T4).

3. Soupape de commande (300) selon l'une quelconque des revendications 1 ou 2, **caractérisée en ce que** le piston de commande (308) est réalisé de telle sorte que dans une quatrième position du piston, à la fois le premier raccord de travail (B) ainsi que le deuxième raccord de travail (A) soient bloqués et qu'en même temps le troisième raccord de travail (Pin) soit connecté fluidiquement au raccord de pression (P).

4. Soupape de commande (300) selon l'une quelconque des revendications 1 à 3, **caractérisée en ce que** le piston de commande (308) est réalisé de telle sorte que dans une cinquième position du piston, le premier raccord de travail (B) soit connecté fluidiquement au raccord de pression (P) et qu'en même temps à la fois le deuxième raccord de travail (A) soit connecté fluidiquement au troisième raccord d'écoulement radial (T3) et le troisième raccord de travail (Pin) soit connecté fluidiquement au raccord d'écoulement axial (T4).

5. Déphaseur d'un moteur à combustion interne comprenant au moins une soupape de commande selon l'une quelconque des revendications précédentes 1 à 4.
